# EUROPEAN PATENT APPLICATION

(11) **EP 4 790 926 A1**
(43) Date of publication of application: **12.08.2026**
(21) Application number: 24887966.0
(22) Date of filing: 06.11.2024
(51) Int. Cl.: H04J 3/16

(54) **DATA TRANSMISSION METHOD, DATA PROCESSING METHOD, AND RELATED DEVICE**

(30) Priority: 07.11.2023 CN 202311476042
(71) Applicant: HUAWEI TECHNOLOGIES CO., LTD., Shenzhen 518129 (CN)
(72) Inventor: LUO, Jiating, Shenzhen, Guangdong 518129 (CN); CHANG, Deyuan, Shenzhen, Guangdong 518129 (CN); HUANG, Kechao, Shenzhen, Guangdong 518129 (CN)
(74) Representative: Isarpatent
(86) International application number: PCT/CN2024/130054
(87) International publication number: WO 2025/098354

(57) **Abstract**

Embodiments of this application disclose a data transmission method, a data processing method, and a related apparatus. If channel quality changes or a client-side requirement changes, a transmitter may process a to-be-transmitted super-frame, so that the to-be-transmitted super-frame carries a symbol or a bit indicating rate switching. For example, at least one reserved symbol in at least one polarization direction of the super-frame indicates the rate switching. For another example, at least one padding bit in a pre-framing bit set indicates the rate switching. In this way, the super-frame transmitted by the transmitter through a channel carries the symbol or the bit indicating the rate switching, and a receiver can flexibly adjust the data processing rate mode by identifying the symbol or the bit. Because the symbol or the bit indicating the rate switching is transmitted to the receiver together with a service, the receiver can implement rate switching at lower delay, without affecting the normal transmission of the service.

## Description

This application claims priority to Chinese Patent Application No. 202311476042.8, filed with the China National Intellectual Property Administration on November 7, 2023 and entitled "DATA TRANSMISSION METHOD, DATA PROCESSING METHOD, AND RELATED APPARATUS", which is incorporated herein by reference in its entirety.

### TECHNICAL FIELD

This application relates to the field of optical communication, and in particular, to a data transmission method, a data processing method, and a related apparatus.

### BACKGROUND

With the development of emerging network technologies such as 5G networks and artificial intelligence, requirements for high-speed and high-bandwidth transmission also increase sharply. Facing limited network resources, there is a need to refine network allocation to maximize spectrum utilization and capacity. Conventional optical networks with standard fixed grids can no longer meet diversified service requirements, and a fixed data throughput also wastes channel capacity. If bandwidth, a modulation format, a transmission rate, and the like can be flexibly adjusted based on channel status, high-performance and low-power transmission can be implemented.

However, due to the complexity of high-speed optical transmission, for example, technologies such as coherent modulation, adaptive signal processing, and forward error correction (Forward Error Correction, FEC) encoding are used, rate switching during optical transmission may introduce high delay or interruption, resulting in transmission quality deterioration.

### SUMMARY

Embodiments of this application provide a data transmission method, a data processing method, and a related apparatus. A transmitter transmits, to a receiver together with a service, a symbol or a bit indicating rate switching, so that the receiver can implement rate switching with lower delay, without affecting the normal transmission of the service.

According to a first aspect, an embodiment of this application provides a data transmission method, and the data transmission method is applied to a transmitter. First, the transmitter obtains at least one super-frame. The super-frame includes a plurality of subframes, and a target subframe in the super-frame in a polarization direction includes a plurality of pilot symbols, a plurality of frame alignment symbols, and a plurality of reserved symbols. At least one target reserved symbol in the target subframe in at least one polarization direction indicates that a data transmission rate changes. Further, the transmitter sends the at least one super-frame to a receiver through a channel. It should be understood that, in some possible scenarios, the target subframe includes a rate switching identifier symbol indicating that the data transmission rate changes. In other words, the rate switching identifier symbol is assigned a function of indicating rate switching, but the rate switching identifier symbol is still carried at a reserved position of the reserved symbol.

In this implementation, if channel quality changes or a client-side requirement changes, the transmitter may process the to-be-transmitted super-frame, so that the to-be-transmitted super-frame carries the symbol indicating the rate switching. For example, at least one reserved symbol in the super-frame in at least one polarization direction indicates the rate switching. In this way, the super-frame transmitted by the transmitter through the channel carries the symbol indicating the rate switching, and the receiver can flexibly adjust the data processing rate mode by identifying the symbol. Because the symbol indicating the rate switching is transmitted to the receiver together with a service, the receiver can implement rate switching at lower delay, without affecting the normal transmission of the service.

In some possible implementations, the target reserved symbol further indicates a changed data transmission rate. In other words, the receiver may learn, by identifying the target reserved symbol, that the transmitter is to transmit data at a new rate, and may further learn of a specific rate at which the transmitter transmits the data. This helps the receiver implement the rate switching more quickly.

In some possible implementations, at least one of a plurality of super-frames includes the target reserved symbol, and a quantity of super-frames carrying the target reserved symbol among the plurality of super-frames indicates the changed data transmission rate. V super-frames (V is an integer greater than 1) are used as an example. The receiver detects the V super-frames to determine a quantity of super-frames carrying the target reserved symbol among the V super-frames, and each detection result correspondingly indicates a specific transmission rate. This has a good practical effect.

In some possible implementations, obtaining the at least one super-frame includes: replacing at least one reserved symbol in the target subframe in at least one polarization direction with the corresponding target reserved symbol. In embodiments of this application, the position of the reserved symbol indicating the rate switching may be defined based on an actual situation. In other words, this part of reserved symbols is reserved to indicate the rate switching, and is no longer used for another purpose. In this way, in a scenario in which the rate switching needs to be performed, the reserved position of the reserved symbol in the super-frame is replaced with the rate switching identifier symbol or the rate switching identifier symbol indicating the rate switching. Implementation complexity is low.

In some possible implementations, a plurality of target reserved symbols in the target subframe in at least one polarization direction indicate that the data transmission rate changes. The plurality of target reserved symbols are a pseudo-random sequence with good correlation, so that the receiver can more easily identify the rate switching identifier symbols in the super-frame.

In some possible implementations, the target reserved symbol and the corresponding reserved symbol before replacement are opposites of each other. This design helps the receiver accurately identify, from a reserved symbol sequence, the rate switching identifier symbol indicating the rate switching, thereby reducing a false detection rate.

In some possible implementations, each target reserved symbol is one of four complex numbers: -A-Aj, -A+Aj, A-Aj, and A+Aj, and A is a real number. In this design, the receiver can more easily and accurately identify the target reserved symbol indicating the rate switching.

In some possible implementations, in a polarization direction, a modulation format of the target reserved symbol is quadrature phase shift keying (Quadrature Phase Shift Keying, QPSK), and A=-1 or 1; in a polarization direction, a modulation format of the target reserved symbol is 16-state quadrature amplitude modulation (16-state Quadrature Amplitude Modulation, 16QAM), and A=-1, 1, -3, 3, $- \sqrt{5}$, or $\sqrt{5}$; or in a polarization direction, a modulation format of the target reserved symbol is 64-state quadrature amplitude modulation (64QAM), and A=-1, 1, -3, 3, $- \sqrt{21} , \sqrt{21}$, -5, 5, -7, or 7.

In some possible implementations, a sum of real parts of all target reserved symbols in the target subframe in a polarization direction is 0, and a sum of imaginary parts of all the target reserved symbols in the target subframe in the polarization direction is 0. Therefore, direct current balance (DC Balance) can be achieved. This facilitates signal quality recovery of the receiver.

In some possible implementations, in a polarization direction, respective quantities of all the target reserved symbols in the target subframe having values of -A-Aj, -A+Aj, A-Aj, and A+Aj differ from each other by no more than 2. This effectively ensures that quantities of reserved symbols of all types are approximately balanced in a polarization direction.

In some possible implementations, the target subframe is a subframe that is arranged at an initial position in the super-frame.

In some possible implementations, the target subframe further includes a plurality of training symbols and/or a plurality of pre-framing symbols.

In some possible implementations, the target subframe includes one pilot symbol at a fixed position in every H consecutive symbols, and H=32, 64, 96, or 128.

According to a second aspect, an embodiment of this application provides a data processing method, and the data processing method is applied to a receiver. First, the receiver obtains a super-frame transmitted through a channel. The super-frame includes a plurality of subframes, a target subframe in the super-frame in a polarization direction includes a plurality of pilot symbols, a plurality of frame alignment symbols, and a plurality of reserved symbols, and at least one target reserved symbol in the target subframe in at least one polarization direction indicates that a data transmission rate changes. Further, the receiver identifies the target reserved symbol in the super-frame, to facilitate data processing on received data in a new rate mode. For example, the receiver receives a first super-frame and a second super-frame that are transmitted through the channel, and the first super-frame enters the channel for transmission before the second super-frame. The receiver identifies that the first super-frame carries a target reserved symbol indicating rate switching. In this case, the receiver performs data processing on the first super-frame in a first rate mode, and performs data processing on the second super-frame in a second rate mode based on the target reserved symbol.

In some possible implementations, identifying the target reserved symbol in the super-frame includes: performing correlation processing on the super-frame based on a preset target reserved symbol, to identify the target reserved symbol in the super-frame. A correlation peak obtained through the correlation processing is greater than a first preset value. A specific implementation of identifying the target reserved symbol in the super-frame is provided herein, and has a low miss detection rate and a low false detection rate.

In some possible implementations, identifying the target reserved symbol in the super-frame includes: obtaining a position in the super-frame for carrying the target reserved symbol; and detecting the position in the super-frame for carrying the target reserved symbol, to identify the target reserved symbol in the super-frame, where a quantity of erroneously detected symbols is less than a second preset value. Another specific implementation of identifying the target reserved symbol in the super-frame is provided herein, and has a low miss detection rate and a low false detection rate.

In some possible implementations, obtaining the super-frame transmitted through the channel includes: receiving a data stream transmitted through the channel; and performing frame alignment, polarization demultiplexing, and phase recovery on the data stream to obtain the super-frame.

In some possible implementations, the target reserved symbol further indicates a changed data transmission rate. In other words, the receiver may learn, by identifying the target reserved symbol, that a transmitter is to transmit data at a new rate, and may further learn of a specific rate at which the transmitter transmits the data. This helps the receiver implement the rate switching more quickly.

In some possible implementations, at least one of a plurality of super-frames includes the target reserved symbol, and a quantity of super-frames carrying the target reserved symbol among the plurality of super-frames indicates the changed data transmission rate. V super-frames (V is an integer greater than 1) are used as an example. The receiver detects the V super-frames to determine a quantity of super-frames carrying a rate switching identifier symbol among the V super-frames, and each detection result correspondingly indicates a specific transmission rate. This has a good practical effect.

In some possible implementations, a plurality of target reserved symbols in the target subframe in at least one polarization direction indicate that the data transmission rate changes. The plurality of target reserved symbols are a pseudo-random sequence with good correlation, so that the receiver can more easily identify the rate switching identifier symbols in the super-frame.

In some possible implementations, the target reserved symbol and the corresponding reserved symbol before replacement are opposites of each other. This design helps the receiver accurately identify, from a reserved symbol sequence, the rate switching identifier symbol indicating the rate switching, thereby reducing a false detection rate.

In some possible implementations, each target reserved symbol is one of four complex numbers: -A-Aj, -A+Aj, A-Aj, and A+Aj, and A is a real number. In this design, the receiver can more easily and accurately identify the target reserved symbol indicating the rate switching.

In some possible implementations, in a polarization direction, a modulation format of the target reserved symbol is QPSK, and A=-1 or 1; in a polarization direction, a modulation format of the target reserved symbol is 16QAM, and A=-1, 1, -3, 3, $- \sqrt{5}$, or $\sqrt{5}$; or in a polarization direction, a modulation format of the target reserved symbol is 64QAM, and A=-1, 1, -3, 3, $- \sqrt{21} , \sqrt{21}$*,* -5, 5, -7, or 7.

In some possible implementations, a sum of real parts of all target reserved symbols in the target subframe in a polarization direction is 0, and a sum of imaginary parts of all the target reserved symbols in the target subframe in the polarization direction is 0. Therefore, direct current balance (DC Balance) can be achieved. This facilitates signal quality recovery of the receiver.

In some possible implementations, in a polarization direction, respective quantities of all the target reserved symbols in the target subframe having values of -A-Aj, -A+Aj, A-Aj, and A+Aj differ from each other by no more than 2. This effectively ensures that quantities of reserved symbols of all types are approximately balanced in a polarization direction.

In some possible implementations, the target subframe is a subframe that is arranged at an initial position in the super-frame.

In some possible implementations, the target subframe further includes a plurality of training symbols and/or a plurality of pre-framing symbols.

In some possible implementations, the target subframe includes one pilot symbol at a fixed position in every H consecutive symbols, and H=32, 64, 96, or 128.

According to a third aspect, an embodiment of this application provides a data transmission method, and the data transmission method is applied to a transmitter. First, a first bit set on which first forward error correction (Forward Error Correction, FEC) encoding is performed is obtained; then, a plurality of padding bits are added to the first bit set to obtain a second bit set, and at least one target padding bit in the plurality of padding bits indicates that a data transmission rate changes; next, second FEC encoding is performed on the second bit set to obtain a third bit set; and further, data processing is performed on the third bit set to obtain a super-frame, and the super-frame is sent. It should be understood that, in some possible scenarios, the second bit set includes a rate switching identifier bit indicating that the data transmission rate changes. In other words, the rate switching identifier bit is assigned a function of indicating rate switching, but the rate switching identifier bit is still carried at a position of the reserved padding bit.

In this implementation, if channel quality changes or a client-side requirement changes, the transmitter may process the to-be-transmitted super-frame, so that the to-be-transmitted super-frame carries the bit indicating the rate switching. For example, at least one padding bit in a pre-framing bit set indicates the rate switching. In this way, the super-frame transmitted by the transmitter through a channel carries the bit indicating the rate switching, and a receiver can flexibly adjust the data processing rate mode by identifying the bit. Because the bit indicating the rate switching is transmitted to the receiver together with a service, the receiver can implement rate switching at lower delay, without affecting the normal transmission of the service.

In some possible implementations, the target padding bit further indicates a changed data transmission rate. In other words, the receiver may learn, by identifying the target padding bit, that the transmitter is to transmit data at a new rate, and may further learn of a specific rate at which the transmitter transmits the data. This helps the receiver implement the rate switching more quickly.

In some possible implementations, a quantity of target padding bits indicates the changed data transmission rate. The receiver determines the quantity of target padding bits through detection, and each detection result correspondingly indicates a specific transmission rate. This has a good practical effect.

In some possible implementations, a value of the target padding bit indicates the data transmission rate obtained through a rate change. In a scenario including a plurality of target padding bits, the receiver determines values of the plurality of target padding bits through hard decision of FEC decoding. The values of the plurality of target padding bits are not unique, and each value result correspondingly indicates a specific transmission rate. This implementation is flexible.

In some possible implementations, after adding the plurality of padding bits to the first bit set to obtain the second bit set, and before performing the second FEC encoding on the second bit set to obtain the third bit set, the method further includes: performing first interleaving on the second bit set. In this way, transfer of error correlation between inner encoding and outer encoding can be reduced, and a burst error can be more effectively resisted.

In some possible implementations, after adding the plurality of padding bits to the first bit set to obtain the second bit set, and before performing the second FEC encoding on the second bit set to obtain the third bit set, the method further includes: scrambling the second bit set. In this way, 0s and 1s in scrambled bit data tend to have equal probabilities, so that direct current balance is achieved. This facilitates receiving at the receiver.

In some possible implementations, the data processing performed on the third bit set includes symbol mapping, second interleaving, polarization distribution, and framing processing.

According to a fourth aspect, an embodiment of this application provides a data processing method, and the data processing method is applied to a receiver. First, the receiver obtains a super-frame transmitted through a channel; then, performs demodulation and FEC decoding on the super-frame to obtain a bit set; and further, identify a target padding bit in the bit set. At least one target padding bit in a plurality of padding bits included in the bit set indicates that a data transmission rate changes, so that data processing is performed on received data in a new rate mode. For example, data processing is performed on a first bit subset in the bit set in a first rate mode, and data processing is performed on a second bit subset in the bit set in a second rate mode based on the target padding bit. The first bit subset includes a bit that is in the bit set and that is before the target padding bit, and the second bit subset includes a bit that is in the bit set and that is after the target padding bit.

In some possible implementations, identifying the target padding bit in the bit set includes: obtaining a position in the bit set for carrying the target padding bit; and detecting the position in the bit set for carrying the target padding bit to identify the target padding bit in the bit set, where a quantity of detected error bits is less than a preset value. A specific implementation of identifying the target reserved symbol in the super-frame is provided herein, and has a low miss detection rate and a low false detection rate.

In some possible implementations, obtaining the super-frame transmitted through the channel includes: receiving a data stream transmitted through the channel; and performing frame alignment, polarization demultiplexing, and phase recovery on the data stream to obtain the super-frame.

According to a fifth aspect, an embodiment of this application provides a sending device. The sending device includes a processing unit and a sending unit. The processing unit is configured to obtain at least one super-frame. The super-frame includes a plurality of subframes, a target subframe in the super-frame in a polarization direction includes a plurality of pilot symbols, a plurality of frame alignment symbols, and a plurality of reserved symbols, and at least one target reserved symbol in the target subframe in at least one polarization direction indicates that a data transmission rate changes. The sending unit is configured to send the at least one super-frame.

In some possible implementations, the target reserved symbol further indicates a changed data transmission rate. In other words, a receiver may learn, by identifying the target reserved symbol, that a transmitter is to transmit data at a new rate, and may further learn of a specific rate at which the transmitter transmits the data. This helps the receiver implement rate switching more quickly.

In some possible implementations, at least one of a plurality of super-frames includes the target reserved symbol, and a quantity of super-frames carrying the target reserved symbol among the plurality of super-frames indicates the changed data transmission rate. V super-frames (V is an integer greater than 1) are used as an example. The receiver detects the V super-frames to determine a quantity of super-frames carrying a rate switching identifier symbol among the V super-frames, and each detection result correspondingly indicates a specific transmission rate. This has a good practical effect.

In some possible implementations, the processing unit is specifically configured to replace at least one reserved symbol in the target subframe in at least one polarization direction with the corresponding target reserved symbol.

In some possible implementations, a plurality of target reserved symbols in the target subframe in at least one polarization direction indicate that the data transmission rate changes, and the plurality of target reserved symbols are a pseudo-random sequence, so that the receiver can more easily identify the rate switching identifier symbols in the super-frame.

In some possible implementations, the target reserved symbol and the corresponding reserved symbol before replacement are opposites of each other. This design helps the receiver accurately identify, from a reserved symbol sequence, the rate switching identifier symbol indicating the rate switching, thereby reducing a false detection rate.

In some possible implementations, each target reserved symbol is one of four complex numbers: -A-Aj, -A+Aj, A-Aj, and A+Aj, and A is a real number. In this design, the receiver can more easily and accurately identify the target reserved symbol indicating the rate switching.

In some possible implementations, in a polarization direction, a modulation format of the target reserved symbol is QPSK, and A=-1 or 1; in a polarization direction, a modulation format of the target reserved symbol is 16QAM, and A=-1, 1, -3, 3, $- \sqrt{5}$, or $\sqrt{5}$; or in a polarization direction, a modulation format of the target reserved symbol is 64QAM, and A=-1, 1, -3, 3, $- \sqrt{21} , \sqrt{21}$*,* -5, 5, -7, or 7.

In some possible implementations, a sum of real parts of all target reserved symbols in the target subframe in a polarization direction is 0, and a sum of imaginary parts of all the target reserved symbols in the target subframe in the polarization direction is 0. Therefore, direct current balance (DC Balance) can be achieved. This facilitates signal quality recovery of the receiver.

In some possible implementations, in a polarization direction, respective quantities of all the target reserved symbols in the target subframe having values of -A-Aj, -A+Aj, A-Aj, and A+Aj differ from each other by no more than 2. This effectively ensures that quantities of reserved symbols of all types are approximately balanced in a polarization direction.

In some possible implementations, the target subframe is a subframe that is arranged at an initial position in the super-frame.

In some possible implementations, the target subframe further includes a plurality of training symbols and/or a plurality of pre-framing symbols.

In some possible implementations, the target subframe includes one pilot symbol at a fixed position in every H consecutive symbols, and H=32, 64, 96, or 128.

According to a sixth aspect, an embodiment of this application provides a receiving device. The receiving device includes a receiving unit and a processing unit. The receiving unit is configured to obtain a super-frame transmitted through a channel, where the super-frame includes a plurality of subframes, a target subframe in the super-frame in a polarization direction includes a plurality of pilot symbols, a plurality of frame alignment symbols, and a plurality of reserved symbols, and at least one target reserved symbol in the target subframe in at least one polarization direction indicates that a data transmission rate changes. The processing unit is configured to identify the target reserved symbol in the super-frame.

In some possible implementations, the processing unit is specifically configured to perform correlation processing on the super-frame based on a preset target reserved symbol, to identify the target reserved symbol in the super-frame, where a correlation peak obtained through the correlation processing is greater than a first preset value.

In some possible implementations, the processing unit is specifically configured to: obtain a position in the super-frame for carrying the target reserved symbol; and detect the position in the super-frame for carrying the target reserved symbol to identify the target reserved symbol in the super-frame, where a quantity of erroneously detected symbols is less than a second preset value.

In some possible implementations, the target reserved symbol further indicates a changed data transmission rate. In other words, a receiver may learn, by identifying the target reserved symbol, that a transmitter is to transmit data at a new rate, and may further learn of a specific rate at which the transmitter transmits the data. This helps the receiver implement rate switching more quickly.

In some possible implementations, at least one of a plurality of super-frames includes the target reserved symbol, and a quantity of super-frames carrying the target reserved symbol among the plurality of super-frames indicates the changed data transmission rate. V super-frames (V is an integer greater than 1) are used as an example. The receiver detects the V super-frames to determine a quantity of super-frames carrying a rate switching identifier symbol among the V super-frames, and each detection result correspondingly indicates a specific transmission rate. This has a good practical effect.

In some possible implementations, a plurality of target reserved symbols in the target subframe in at least one polarization direction indicate that the data transmission rate changes. The plurality of target reserved symbols are a pseudo-random sequence with good correlation, so that the receiver can more easily identify the rate switching identifier symbols in the super-frame.

In some possible implementations, the target reserved symbol and the corresponding reserved symbol before replacement are opposites of each other. This design helps the receiver accurately identify, from a reserved symbol sequence, the rate switching identifier symbol indicating the rate switching, thereby reducing a false detection rate.

In some possible implementations, each target reserved symbol is one of four complex numbers: -A-Aj, -A+Aj, A-Aj, and A+Aj, and A is a real number. In this design, the receiver can more easily and accurately identify the target reserved symbol indicating the rate switching.

In some possible implementations, in a polarization direction, a modulation format of the target reserved symbol is QPSK, and A=-1 or 1; in a polarization direction, a modulation format of the target reserved symbol is 16QAM, and A=-1, 1, -3, 3, $- \sqrt{5}$, or $\sqrt{5}$; or in a polarization direction, a modulation format of the target reserved symbol is 64QAM, and A=-1, 1, -3, 3, $- \sqrt{21} , \sqrt{21}$, -5, 5, -7, or 7.

In some possible implementations, a sum of real parts of all target reserved symbols in the target subframe in a polarization direction is 0, and a sum of imaginary parts of all the target reserved symbols in the target subframe in the polarization direction is 0. Therefore, direct current balance (DC Balance) can be achieved. This facilitates signal quality recovery of the receiver.

In some possible implementations, in a polarization direction, respective quantities of all the target reserved symbols in the target subframe having values of -A-Aj, -A+Aj, A-Aj, and A+Aj differ from each other by no more than 2. This effectively ensures that quantities of reserved symbols of all types are approximately balanced in a polarization direction.

In some possible implementations, the target subframe is a subframe that is arranged at an initial position in the super-frame.

In some possible implementations, the target subframe further includes a plurality of training symbols and/or a plurality of pre-framing symbols.

In some possible implementations, the target subframe includes one pilot symbol at a fixed position in every H consecutive symbols, and H=32, 64, 96, or 128.

According to a seventh aspect, an embodiment of this application provides a sending device. The sending device includes a processing unit and a sending unit. The processing unit is configured to: obtain a first bit set on which first FEC encoding is performed; add a plurality of padding bits to the first bit set to obtain a second bit set, where at least one target padding bit in the plurality of padding bits indicates that a data transmission rate changes; perform second FEC encoding on the second bit set to obtain a third bit set; and perform data processing on the third bit set to obtain a super-frame. The sending unit is configured to send the super-frame.

In some possible implementations, the target padding bit further indicates a changed data transmission rate. In other words, a receiver may learn, by identifying the target padding bit, that a transmitter is to transmit data at a new rate, and may further learn of a specific rate at which the transmitter transmits the data. This helps the receiver implement rate switching more quickly.

In some possible implementations, after adding the plurality of padding bits to the first bit set to obtain the second bit set, and before performing the second FEC encoding on the second bit set to obtain the third bit set, the processing unit is further configured to perform first interleaving on the second bit set. In this way, transfer of error correlation between inner encoding and outer encoding can be reduced, and a burst error can be more effectively resisted.

In some possible implementations, after adding the plurality of padding bits to the first bit set to obtain the second bit set, and before performing the second FEC encoding on the second bit set to obtain the third bit set, the processing unit is further configured to scramble the second bit set. In this way, 0s and 1s in scrambled bit data tend to have equal probabilities, so that direct current balance is achieved. This facilitates receiving at the receiver.

In some possible implementations, the data processing performed on the third bit set includes symbol mapping, second interleaving, polarization distribution, and framing processing.

According to an eighth aspect, an embodiment of this application provides a receiving device. The receiving device includes a receiving unit and a processing unit. The receiving unit is configured to obtain a super-frame transmitted through a channel. The processing unit is configured to: perform demodulation and FEC decoding on the super-frame to obtain a bit set, and identify a target padding bit in the bit set. At least one target padding bit in a plurality of padding bits included in the bit set indicates that a data transmission rate changes, so that data processing is performed on received data in a new rate mode.

In some possible implementations, the processing unit is specifically configured to: obtain a position in the bit set for carrying the target padding bit; and detect the position in the bit set for carrying the target padding bit to identify the target padding bit in the bit set, where a quantity of detected error bits is less than a preset value.

According to a ninth aspect, an embodiment of this application provides a sending device. The sending device includes a processor and an interface circuit. The processor is configured to perform the data transmission method described in any one of the implementations of the first aspect or the third aspect. The interface circuit is configured to send a super-frame through a channel.

According to a tenth aspect, an embodiment of this application provides a receiving device. The receiving device includes a processor and an interface circuit. The interface circuit is configured to obtain a super-frame transmitted through a channel, and the processor is configured to perform the data processing method described in any one of the implementations of the second aspect or the fourth aspect.

According to an eleventh aspect, an embodiment of this application provides a data transmission system. The data transmission system includes the sending device described in any one of the implementations of the fifth aspect, the seventh aspect, or the ninth aspect, and the receiving device described in any one of the implementations of the sixth aspect, the eighth aspect, or the tenth aspect.

According to a twelfth aspect, an embodiment of this application provides an optical module. The optical module includes a processor and an interface circuit. The processor is configured to perform the data transmission method described in any one of the implementations of the first aspect or the third aspect. The interface circuit is configured to send a super-frame through a channel.

According to a thirteenth aspect, an embodiment of this application provides an optical module. The optical module includes a processor and an interface circuit. The interface circuit is configured to obtain a super-frame transmitted through a channel, and the processor is configured to perform the data processing method described in any one of the implementations of the second aspect or the fourth aspect.

According to a fourteenth aspect, an embodiment of this application provides a chip. The chip includes a processor, and the processor is configured to perform the method described in any one of the implementations of the first aspect to the fourth aspect.

According to a fifteenth aspect, an embodiment of this application provides a computer-readable storage medium. The computer-readable storage medium stores a computer program. When the computer program is executed by a computer, the method described in any one of the implementations of the first aspect to the fourth aspect is implemented.

According to the foregoing technical solutions, it can be learned that embodiments of this application have the following advantages:

In this implementation, if channel quality changes or a client-side requirement changes, a transmitter may process a to-be-transmitted super-frame, so that the to-be-transmitted super-frame carries a symbol or a bit indicating rate switching. For example, at least one reserved symbol in the super-frame in at least one polarization direction indicates the rate switching. For another example, at least one padding bit in a pre-framing bit set indicates the rate switching. In this way, the super-frame transmitted by the transmitter through a channel carries the symbol or the bit indicating the rate switching, and a receiver can flexibly adjust the data processing rate mode by identifying the symbol or the bit. Because the symbol or the bit indicating the rate switching is transmitted to the receiver together with a service, the receiver can implement rate switching at lower delay, without affecting the normal transmission of the service.

### BRIEF DESCRIPTION OF DRAWINGS

FIG. 1 is a diagram of a communication system to which an embodiment of this application is applied;
FIG. 2 is a diagram of another communication system to which an embodiment of this application is applied;
FIG. 3 is a diagram of an implementation of a transmitter data processor according to an embodiment of this application;
FIG. 4 is a diagram of another implementation of a transmitter data processor according to an embodiment of this application;
FIG. 5 is a diagram of still another implementation of a transmitter data processor according to an embodiment of this application;
FIG. 6 is a diagram of yet another implementation of a transmitter data processor according to an embodiment of this application;
FIG. 7 is a diagram of a data transmission method according to an embodiment of this application;
FIG. 8a to FIG. 8c are diagrams of framing processes according to an embodiment of this application;
FIG. 9 is a diagram of a structure of a super-frame according to an embodiment of this application;
FIG. 10a and FIG. 10b are diagrams of a first structure of subframes according to an embodiment of this application;
FIG. 11a and FIG. 11b are diagrams of a second structure of subframes according to an embodiment of this application;
FIG. 12a and FIG. 12b are diagrams of a third structure of subframes according to an embodiment of this application;
FIG. 13 is a diagram of a scenario of switching between different rate modes according to an embodiment of this application;
FIG. 14a and FIG. 14b are diagrams of constellation diagrams in two polarization directions according to an embodiment of this application;
FIG. 15a and FIG. 15b are other diagrams of constellation diagrams in two polarization directions according to an embodiment of this application;
FIG. 16 is a diagram of comparison between a first bit set and a second bit set according to an embodiment of this application;
FIG. 17 is a diagram of a structure of a second bit set;
FIG. 18 is a diagram of another structure of a second bit set;
FIG. 19 is a diagram of another structure of a second bit set;
FIG. 20 is a diagram of an analog symbol data stream according to an embodiment of this application;
FIG. 21 is a diagram of an application scenario in which a receiver performs rate switching according to an embodiment of this application;
FIG. 22 is a diagram of a structure of a sending device according to an embodiment of this application;
FIG. 23 is a diagram of a structure of a receiving device according to an embodiment of this application;
FIG. 24 is a diagram of another structure of a sending device according to an embodiment of this application; and
FIG. 25 is a diagram of another structure of a receiving device according to an embodiment of this application.

### DESCRIPTION OF EMBODIMENTS

Embodiments of this application provide a data transmission method, a data processing method, and a related apparatus. A transmitter transmits, to a receiver together with a service, a symbol or a bit indicating rate switching, so that the receiver can implement rate switching at lower delay, without affecting the normal transmission of the service.

It should be noted that in the specification, claims, and the foregoing accompanying drawings of this application, the terms "first", "second", and the like are intended to distinguish between similar objects but do not limit a specific order or sequence. It should be understood that the foregoing terms may be interchanged in proper cases, so that embodiments described in this application can be implemented in an order other than the content described in this application. In addition, the terms "include", "have", and any other variant thereof are intended to cover a non-exclusive inclusion. For example, a process, a method, a system, a product, or a device that includes a series of steps or units is not necessarily limited to those expressly listed steps or units, but may include other steps or units not expressly listed or inherent to such a process, method, product, or device.

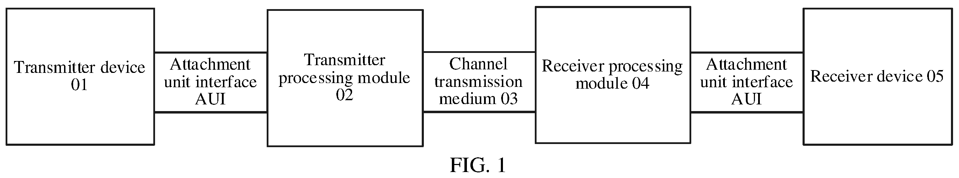

FIG. 1 is a diagram of a communication system to which an embodiment of this application is applied. As shown in FIG. 1, the communication system includes a transmitter device 01, a transmitter processing module 02, a channel transmission medium 03, a receiver processing module 04, and a receiver device 05. For example, the communication system is a data center network. The transmitter device 01 and the receiver device 05 may be devices such as a switch or a router, the transmitter device 01 is also referred to as a host chip (host chip) located at a transmitter, the receiver device 05 is also referred to as a host chip located at a receiver, and the channel transmission medium 03 may be an optical fiber. The host chip is also sometimes referred to as a host device (host device). The transmitter device 01 may be connected to the transmitter processing module 02 through an attachment unit interface (attachment unit interface, AUI), and the receiver device 05 may be connected to the receiver processing module 04 through an AUI. The transmitter processing module 02 and the receiver processing module 04 may both be an optical module (optical module), an electrical module, a connector (connector), or another module that processes data in a data sending process. For example, the processing module may be an 800G ZR module (800G ZR module, a coherent optical module). In addition, the transmitter device 01, the transmitter processing module 02, the channel transmission medium 03, the receiver processing module 04, and the receiver device 05 in the communication system may all support bidirectional transmission or unidirectional transmission. This is not specifically limited herein.

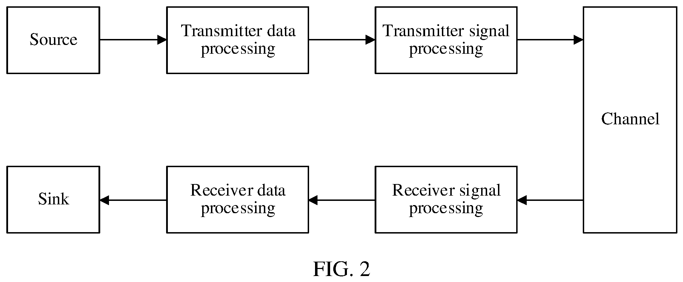

FIG. 2 is a diagram of another communication system to which an embodiment of this application is applied. As shown in FIG. 2, at a transmitter, a source provides a to-be-sent data stream. A transmitter data processor receives the data stream, performs data processing including encoding, interleaving, modulation, and DSP framing on the data stream to obtain a symbol data stream, which is sent to a transmitter signal processor for transmitter signal preprocessing, and a preprocessed signal is transmitted to a receiving device through a channel. After receiving a distorted signal caused by noise or other impairments in the channel, the receiving device sends the signal to a receiver signal processor for operations such as clock synchronization, dispersion compensation, frame alignment, polarization demultiplexing, and phase recovery. Then, an obtained data stream is sent to a receiver data processor for processing including demodulation, de-interleaving, and decoding, to recover original data, and the data is sent to a sink. Transmitter data processing and transmitter signal processing shown in FIG. 2 may be applied to the transmitter processing module 02 shown in FIG. 1, and receiver data processing and receiver signal processing shown in FIG. 2 may be applied to the receiver processing module 04 shown in FIG. 1.

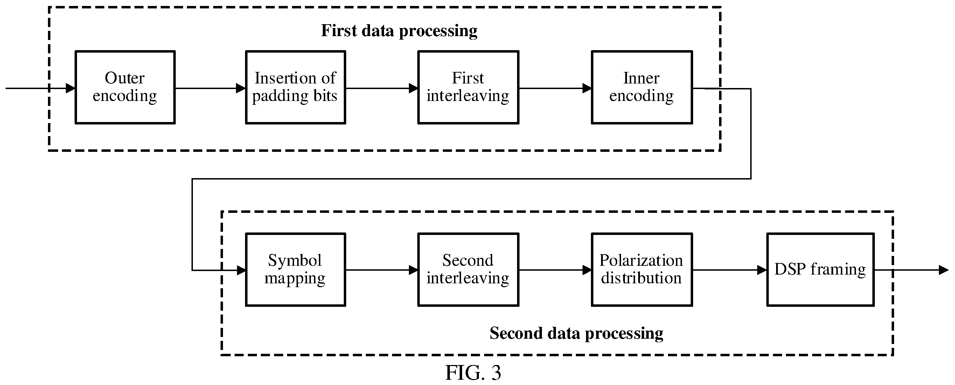

FIG. 3 is a diagram of an implementation of a transmitter data processor according to an embodiment of this application. As shown in FIG. 3, the transmitter data processor obtains to-be-encoded bit data from a received data sequence; performs first data processing including outer encoding, insertion of padding bits (padding bits), first interleaving, and inner encoding, to obtain data on which the outer encoding and the inner encoding are performed; and then performs second data processing including symbol mapping (symbol mapping), second interleaving, polarization distribution (polarization distribution), and DSP framing (framing). In an example, after obtaining to-be-encoded bit data, the transmitter data processor first performs first data processing, to be specific, sequentially performs outer encoding, insertion of padding bits (padding bits), first interleaving, and inner encoding, to obtain data on which the outer encoding and the inner encoding are performed; and then performs second data processing, to be specific, sequentially performs symbol mapping (symbol mapping), second interleaving, polarization distribution (polarization distribution), and DSP framing (framing).

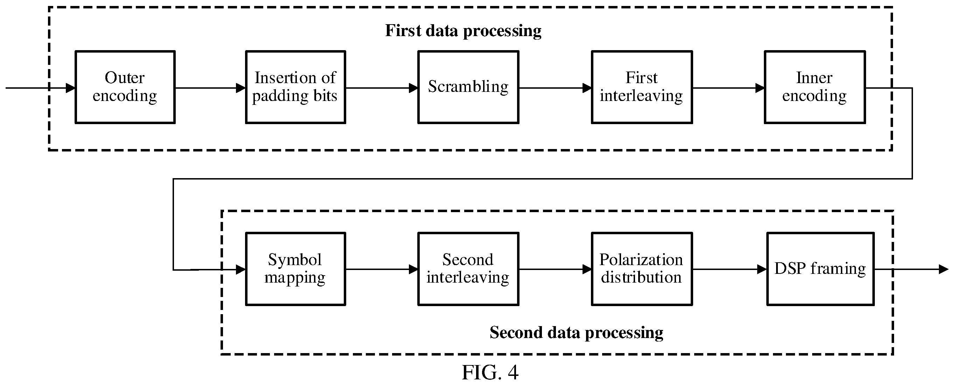

FIG. 4 is a diagram of another implementation of a transmitter data processor according to an embodiment of this application. It should be understood that, during actual application, operations performed by the transmitter data processor include but are not limited to the operations shown in FIG. 3. As shown in FIG. 4, before first interleaving processing is performed, scrambling (scrambling) may be further performed on outer encoded data that is obtained through outer encoding and insertion of padding bits. It should be noted that, for the data processing procedures shown in FIG. 3 and FIG. 4, second interleaving in second data processing is interleaving processing performed after modulated symbol data is obtained through symbol mapping, and is also referred to as symbol interleaving (symbol interleaving).

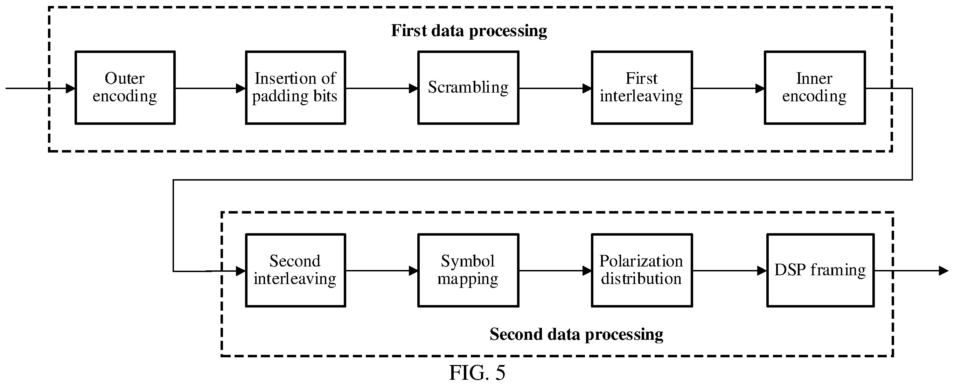

FIG. 5 is a diagram of still another implementation of a transmitter data processor according to an embodiment of this application. It should be understood that an execution sequence of the steps in the foregoing second data processing may also be flexibly adjusted. As shown in FIG. 5, the transmitter data processor obtains to-be-encoded bit data; first performs first data processing, to be specific, sequentially performs outer encoding, insertion of padding bits (padding bits), scrambling (Scrambling), first interleaving, and inner encoding, to obtain data on which the outer encoding and the inner encoding are performed; and then performs second data processing, to be specific, sequentially performs second interleaving, symbol mapping (symbol mapping), polarization distribution (polarization distribution), and DSP framing (framing).

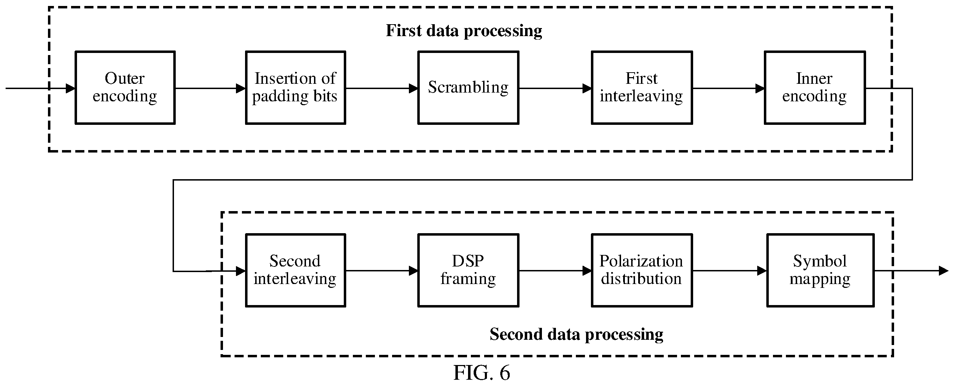

FIG. 6 is a diagram of yet another implementation of a transmitter data processor according to an embodiment of this application. As shown in FIG. 6, the transmitter data processor obtains to-be-encoded bit data; first performs first data processing, to be specific, sequentially performs outer encoding, insertion of padding bits (padding bits), scrambling (Scrambling), first interleaving, and inner encoding, to obtain data on which the outer encoding and the inner encoding are performed; and then performs second data processing, to be specific, sequentially performs second interleaving, DSP framing (framing), polarization distribution (polarization distribution), and symbol mapping (symbol mapping).

It should be noted that, the DSP framing operation in FIG. 3, FIG. 4, and FIG. 5 is to insert at least one type of preset symbols (preset symbols), such as pilot symbols (pilot symbols), training symbols (training symbols), frame alignment symbols (frame alignment symbols), or reserved symbols (reserved symbols), into symbol data obtained through the symbol mapping. A plurality of pilot symbols inserted during the DSP framing are used for carrier phase recovery, a plurality of training symbols are used for link training, and a plurality of frame alignment symbols are used for frame alignment to obtain a boundary of a DSP frame. A plurality of reserved symbols are reserved for other purposes in the future, and may be randomized, or some of the reserved symbols may be fixed for other purposes, for example, used for optical signal-to-noise ratio (optical signal-to-noise ratio, OSNR) measurement and end-to-end (E2E) delay measurement. In some specific applications, the DSP frame obtained through the DSP framing includes a plurality of subframes, and the DSP frame is also referred to as a super-frame (super-frame) or a multi-frame (multi-frame).

It should be further noted that, the DSP framing operation in FIG. 3, FIG. 4, and FIG. 5 is an operation performed on symbols. Alternatively, in the manner shown in FIG. 6, for data after the second interleaving, the DSP framing processing is performed before the symbol mapping according to a used symbol mapping rule, for example, bits corresponding to at least one type of preset symbols such as pilot symbols, training symbols, frame alignment symbols, or reserved symbols are inserted, and then the polarization distribution and the symbol mapping are performed to obtain a DSP frame. The DSP frame is the same as the DSP frame obtained through the symbol-based DSP framing. It should be understood that another DSP framing (framing) manner is not excluded. Details are not described in this application.

It should be further noted that, in some possible scenarios, the first interleaving operation in FIG. 3 to FIG. 6 may be bypassed (bypassed). In other words, the first interleaving is an optional operation, so that the first data processing has a low delay.

It should be understood that the "inner" in an inner code and the "outer" in an outer code are distinguished based merely on a distance between a channel transmission medium and an execution body that performs an operation on data. An execution body that performs an operation on the inner code is closer to the channel transmission medium, and an execution body that performs an operation on the outer code is farther away from the channel transmission medium. In embodiments of this application, FIG. 1 is used as an example. Because the transmitter processing module 02 sequentially encodes data twice and then sends encoded data to the channel transmission medium, data that is first encoded by the transmitter processing module 02 is farther away from the channel transmission medium, and data that is later encoded by the transmitter processing module 02 is closer to the channel transmission medium. In this way, the data that is first encoded by the transmitter processing module 02 is referred to as outer encoded data, and the data that is later encoded by the transmitter processing module 02 is referred to as inner encoded data. Correspondingly, data that is first decoded by the receiver processing module 04 is referred to as inner decoded data, and data that is later decoded by the receiver processing module 04 is referred to as outer decoded data. In a possible implementation, both the inner encoding and the outer encoding use a FEC encoding scheme, to form a concatenated FEC-based transmission solution. For example, the transmitter processing module 02 may perform the outer encoding by using a staircase (staircase, SC) code; and perform the inner encoding by using a Hamming (Hamming) code, or perform the inner encoding by using a Bose-Chaudhuri-Hocquenghem (Bose-Chaudhuri-Hocquenghem, BCH) code.

It should be understood that the foregoing content is descriptions of examples of application scenarios of the method provided in embodiments of this application, and does not constitute a limitation on the application scenario of the method. A person of ordinary skill in the art may learn that, as a service requirement changes, the application scenario may be adjusted based on an application requirement. This is not enumerated one by one in embodiments of this application. FIG. 3 to FIG. 6 mainly describe the implementations applied to the data transmitter. An implementation applied to a receiver may be understood as an inverse operation of the implementation of the transmitter. The implementation of the receiver is also clear when the implementation of the transmitter is determined. For example, an inverse operation of encoding is decoding, an inverse operation of insertion of padding bits is removing the padding bits, an inverse operation of interleaving is de-interleaving, an inverse operation of symbol mapping is demodulation, an inverse operation of polarization distribution is polarization demultiplexing, and an inverse operation of scrambling is descrambling.

During actual application, if a channel is degraded due to bending or twisting of an optical fiber in a communication process, and quality of a received signal is degraded, the transmitter may improve communication transmission quality by changing a data transmission rate. Alternatively, the transmitter may change a data transmission rate based on a change of a client-side requirement. To enable the receiver to learn in time that the transmitter needs to change the data transmission rate, a manner is designed in this application, so that data sent by the transmitter may also carry a symbol or a bit indicating rate switching. In this case, the receiver processes the received data based on an actual requirement in a new rate mode. Details are described below.

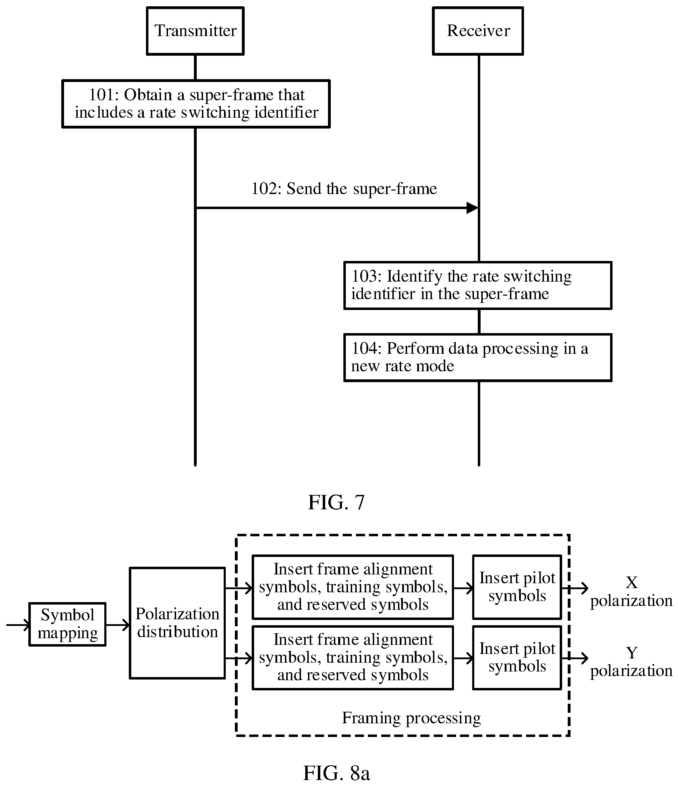

FIG. 7 is a diagram of a data transmission method according to an embodiment of this application. As shown in FIG. 7, the data transmission method includes the following steps. It should be understood that, for ease of description, first FEC encoding in the following may be considered as the outer encoding described above, and second FEC encoding in the following may be considered as the inner encoding described above. The following may be understood based on this. It should be further understood that a transmitter and a receiver in the following are named based on a data stream direction, and functions of the devices are not limited. The transmitter may also have a receiving function, and the receiver may also have a sending function.

101: Obtain a super-frame that includes a rate switching identifier.

In embodiments of this application, the transmitter may indicate rate switching in a plurality of manners by using the to-be-sent super-frame. In a possible implementation, at least one reserved symbol inserted during DSP framing described in the second data processing in FIG. 3 to FIG. 6 indicates that a data transmission rate changes. In other words, one or more reserved symbols are reserved to indicate the rate switching. Herein, the reserved symbol indicating the rate switching may be referred to as a rate switching identifier symbol. In another possible implementation, at least one padding bit described in the first data processing in FIG. 3 to FIG. 6 indicates that a data transmission rate changes. In other words, one or more padding bits are inserted to indicate the rate switching. Herein, the padding bit indicating the rate switching may be referred to as a rate switching identifier bit. The following separately describes the two implementations in detail.

Implementation 1: The one or more reserved symbols are reserved to indicate the rate switching.

FIG. 8a to FIG. 8c are diagrams of framing processes according to an embodiment of this application. In a framing manner, as shown in FIG. 8a, symbol mapping (symbol mapping) is performed on a received data sequence, including but not limited to quadrature phase shift keying (Quadrature Phase Shift Keying, QPSK) and quadrature amplitude modulation (Quadrature Amplitude Modulation, QAM), and then, polarization symbol distribution (Polarization distribution) is performed to obtain dual-polarization (Dual-polarization, DP) symbols, for example, DP-QPSK, DP-8QAM, DP-16QAM, DP-32QAM, and DP-64QAM symbols. A specific quantity of dual-polarization symbols are framed. These dual-polarization symbols before framing are referred to as pre-framing symbols, or may be referred to as payload (payload) symbols. The framing process is as follows: A frame alignment word sequence (Frame Alignment Word Sequence, FAW Sequence), a training symbol sequence (Training Sequence), a reserved symbol (Reserved Field) sequence, and a pilot symbol sequence (Pilot Sequence) are inserted in each of X and Y polarization directions, to obtain a to-be-sent dual-polarization symbol sequence, which is referred to as a super-frame (super-frame) or a multi-frame (multi-frame). Herein, the frame alignment word sequence is also referred to as a super-frame alignment word sequence (Super-Frame Alignment Word Sequence). It should be noted that the frame alignment word sequence may alternatively be used for link training. In this case, the frame alignment symbol sequence may be considered as a training symbol sequence.

In embodiments of this application, one dual-polarization symbol may be represented by two symbols, where one symbol is located in the X polarization direction, the other symbol is located in the Y polarization direction, and each symbol may be represented by a complex number. For example, a symbol obtained through 16QAM modulation may be represented by any one of the following 16 complex numbers: ±1±1j, ±1±3j, ±3±1j, and ±3±3j, where j is a complex number unit, which may alternatively be represented by another letter, for example, i. It should be understood that, in some cases, a real part and an imaginary part are normalized, without changing the essence. Further, a sequence with N dual-polarization symbols may be completely represented by two complex sequences of length N, where one complex sequence represents symbols on the X polarization, and the other complex sequence represents symbols on the Y polarization. Each complex number sequence of length N is represented by a real part sequence of length N and an imaginary part sequence of length N, where N is an integer greater than 1.

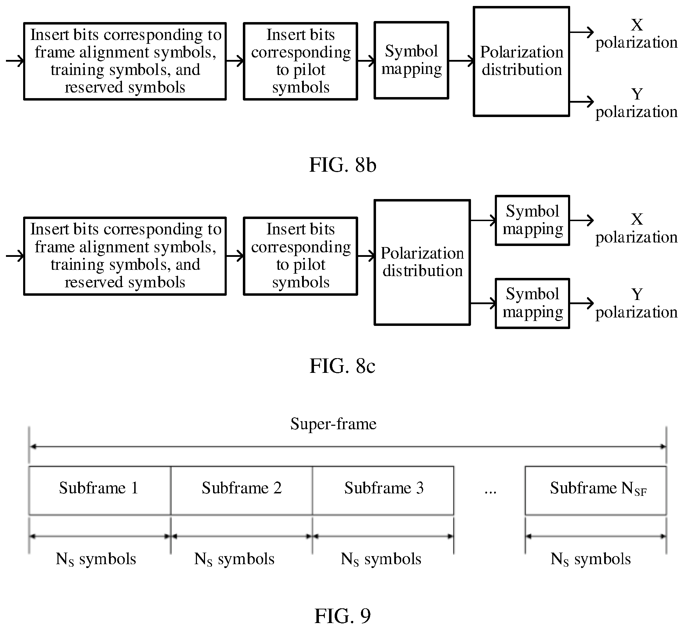

Generally, the received data sequence is an information and parity sequence obtained through forward error correction (Forward Error Correction, FEC) encoding, and the framing operation shown in FIG. 8a is an operation performed on symbols. In another framing manner, as shown in FIG. 8b, for a received data sequence, bits corresponding to a frame alignment word sequence, a training symbol sequence, a reserved symbol sequence, and a pilot symbol sequence are first inserted according to a used symbol mapping rule, and then symbol mapping and polarization distribution are performed, to obtain a super-frame that is the same as that obtained through the operation in FIG. 8a. Similarly, in still another framing manner, as shown in FIG. 8c, for a received data sequence, bits corresponding to a frame alignment word sequence, a training symbol sequence, a reserved symbol sequence, and a pilot symbol sequence are first inserted according to a used symbol mapping rule, and then polarization distribution and symbol mapping are performed, to obtain a super-frame that is the same as that obtained through the operation in FIG. 8a. It should be understood that, in addition to the framing manners described in FIG. 8a to Fig. 8c, there may be another similar framing manner. Details are not described in this application.

FIG. 9 is a diagram of a structure of a super-frame according to an embodiment of this application. As shown in FIG. 9, the super-frame includes N_{SF} subframes, and each subframe includes N_{S} symbols. In this case, the super-frame includes N_{F} symbols, *N_{F} = N_{SF}* × *N_{S},* and both the N_{S} and the N_{SF} are integers greater than 1. Subframes in the super-frame are classified into two types, which are denoted as a type-1 subframe and a type-2 subframe herein. The following separately describes the two types of subframes.

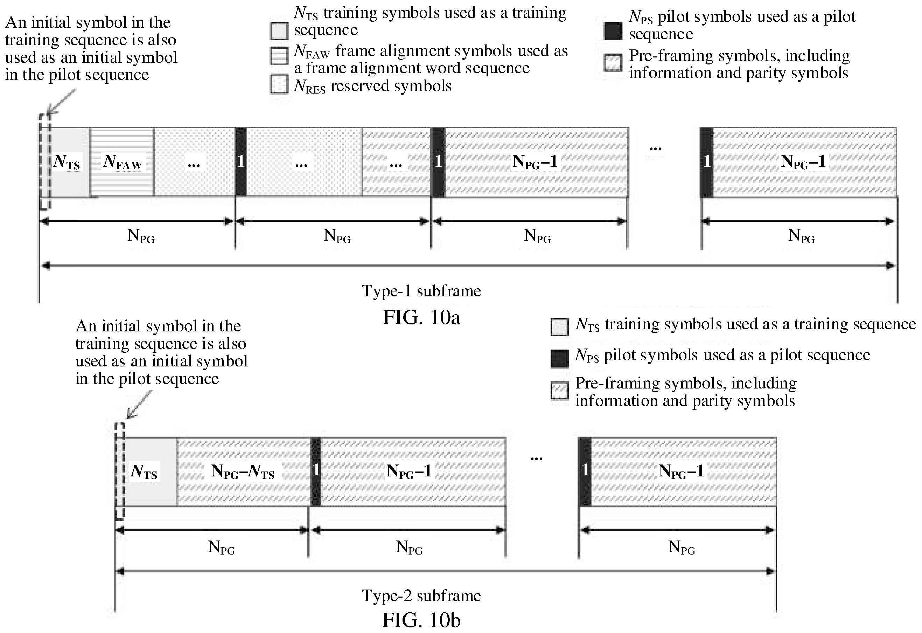

FIG. 10a and FIG. 10b are diagrams of a first structure of subframes according to an embodiment of this application. FIG. 10a shows a structure of a type-1 subframe, and the type-1 subframe includes training symbols, pilot symbols, frame alignment symbols, reserved symbols, and payload symbols. Generally, the type-1 subframe is a subframe arranged at an initial position in the super-frame, and certainly, may alternatively be at another position in the super-frame. For example, the type-1 subframe may also be a subframe arranged at a last position in the super-frame. A subframe other than the type-1 subframe in the super-frame is a type-2 subframe. As shown in FIG. 10b, the type-2 subframe is different from the type-1 subframe, and the type-2 subframe includes training symbols, pilot symbols, and payload symbols, but does not include a frame alignment symbol or a reserved symbol.

For the type-1 subframe and the type-2 subframe, each subframe includes training symbols and pilot symbols. The training symbol is used for link training and/or subframe alignment, and the pilot symbol is used for carrier phase recovery. In a polarization direction, a quantity of training symbols in the subframe is denoted as N_{TS}, and a quantity of pilot symbols in the subframe is denoted as N_{PS}, where both N_{TS} and N_{PS} are integers greater than 1. It should be noted that one symbol in the subframe is both a training symbol and a pilot symbol, namely, a symbol indicated by a dashed-line box in FIG. 10a and FIG. 10b. The N_{TS} training symbols include the symbol indicated by the dashed-line box, and the N_{PS} pilot symbols also include the symbol indicated by the dashed-line box. Further, N_{TS}+N_{PS} is greater than or equal to 5, and N_{TS}+N_{PS} is an odd number. Generally, the N_{TS} consecutive training symbols are arranged starting from a start position in the subframe, and a symbol at the start position in the N_{TS} consecutive training symbols is both a training symbol and a pilot symbol. To be specific, an initial symbol in the subframe is an initial symbol in a training symbol sequence, and is also an initial symbol in a pilot symbol sequence. In other words, the initial symbol in the training symbol sequence is also the initial symbol in the pilot symbol sequence, and the initial symbol in the training symbol sequence has a same value as the initial symbol in the pilot symbol sequence. Certainly, the symbol indicated by the dashed-line box in FIG. 10a and FIG. 10b may alternatively be any one of the N_{TS} training symbols. This is not limited in this application.

For each subframe in the super-frame, every N_{PG} consecutive symbols in the subframe include one pilot symbol at a fixed position, where N_{PG} is 32, 64, 96, or 128. It should be understood that, because the position of the pilot symbol in every N_{PG} consecutive symbols is fixed, two consecutive pilot symbols in the subframe are at an equal interval. Generally, the pilot symbol is at a start position in every N_{PG} consecutive symbols. Certainly, the pilot symbol may alternatively be at any position in every N_{PG} consecutive symbols. This is not limited herein.

It should be noted that the frame alignment symbol is used for alignment between super-frames. The frame alignment symbol may be used for the alignment between the super-frames together with the training symbol, or may be used for achieving alignment together with the pilot symbol. It should be understood that the frame alignment symbols are arranged consecutively, and may be adjacent to the training symbols, as shown in FIG. 10a and FIG. 10b. In addition, there may also be one or more symbol intervals between the frame alignment symbols and the training symbols. A plurality of frame alignment symbols are usually followed by a plurality of reserved symbols, which may be reserved for future use. The reserved symbols need to be randomized, and may not be symbols in a constellation diagram of a used modulation format. Certainly, in some applications, the reserved symbols may alternatively be symbols in the constellation diagram of the used modulation format. Alternatively, a part of the reserved symbols may be fixed for other purposes, for example, optical signal-to-noise ratio (optical signal-to-noise ratio, OSNR) measurement and end-to-end (E2E) delay measurement. Alternatively, the reserved symbols may be located in one of a plurality of type-2 subframes. This is not limited in this application. Remaining symbols are pre-framing symbols (that is, payload symbols) including information and parity symbols, where the pilot symbols do not overlap the reserved symbols, and the pilot symbols do not overlap the pre-framing symbols either. In other words, there is no symbol that is both a pilot symbol and a pre-framing symbol, and there is no symbol that is both a pilot symbol and a reserved symbol.

It should be noted that, in addition to the subframe structures described in FIG. 10a and FIG. 10b, the type-1 subframe may not include the training sequence. The following describes possible structures of other two subframes.

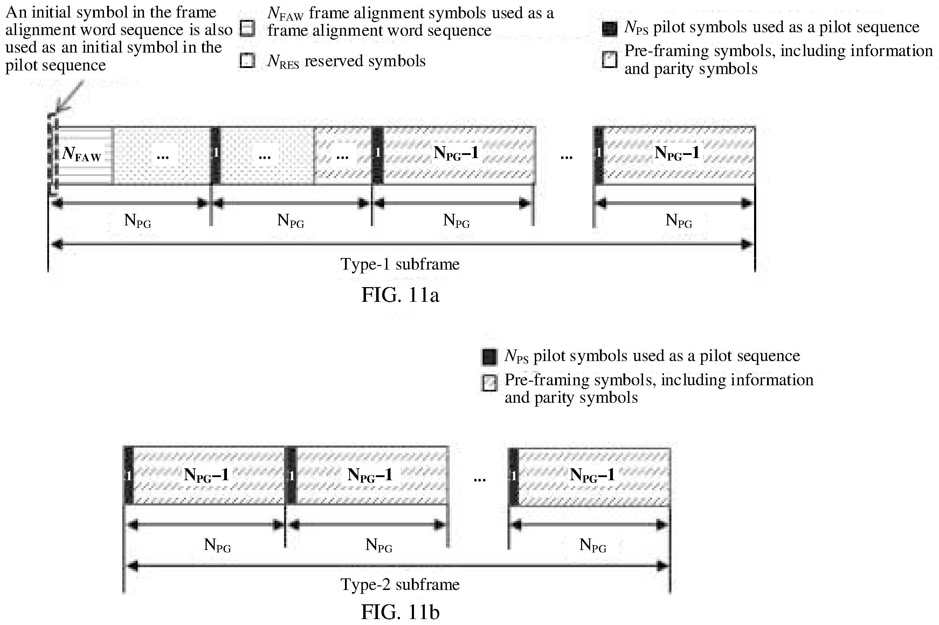

FIG. 11a and FIG. 11b are diagrams of a second structure of subframes according to an embodiment of this application. FIG. 11a shows a structure of a type-1 subframe, and the type-1 subframe includes pilot symbols, frame alignment symbols, reserved symbols, and payload symbols. Generally, the type-1 subframe is a subframe arranged at an initial position in the super-frame, and certainly, may alternatively be at another position in the super-frame. For example, the type-1 subframe may also be a subframe arranged at a last position in the super-frame. A subframe other than the type-1 subframe in the super-frame is a type-2 subframe. As shown in FIG. 11b, the type-2 subframe is different from the type-1 subframe, and the type-2 subframe includes pilot symbols and payload symbols, but does not include a frame alignment symbol or a reserved symbol.

For the type-1 subframe and the type-2 subframe, each subframe includes the pilot symbols, and the pilot symbol is used for carrier phase recovery. In a polarization direction, a quantity of pilot symbols in the subframe is denoted as N_{PS}, where N_{PS} is an even number greater than 0. For the type-1 subframe, one symbol in the type-1 subframe is both a pilot symbol and a frame alignment symbol, namely, a symbol indicated by a dashed-line box in FIG. 11a. A quantity of frame alignment symbols in the type-1 subframe is denoted as N_{FAW}, where N_{FAW} is an odd number. The N_{FAW} frame alignment symbols include the symbol indicated by the dashed-line box, and the N_{PS} pilot symbols also include the symbol indicated by the dashed-line box. Generally, the N_{FAW} frame alignment symbols are arranged starting from a start position in the type-1 subframe, and a symbol at the start position in the N_{FAW} frame alignment symbols is both a frame alignment symbol and a pilot symbol. To be specific, an initial symbol in the type-1 subframe is an initial symbol in a frame alignment word sequence, and is also an initial symbol in a pilot symbol sequence. In other words, the initial symbol in the frame alignment word sequence is also the initial symbol in the pilot symbol sequence, and the initial symbol in the frame alignment word sequence has a same value as the initial symbol in the pilot symbol sequence. Certainly, the symbol indicated by the dashed-line box in FIG. 11a may alternatively be any one of the N_{FAW} frame alignment symbols. This is not limited in this application.

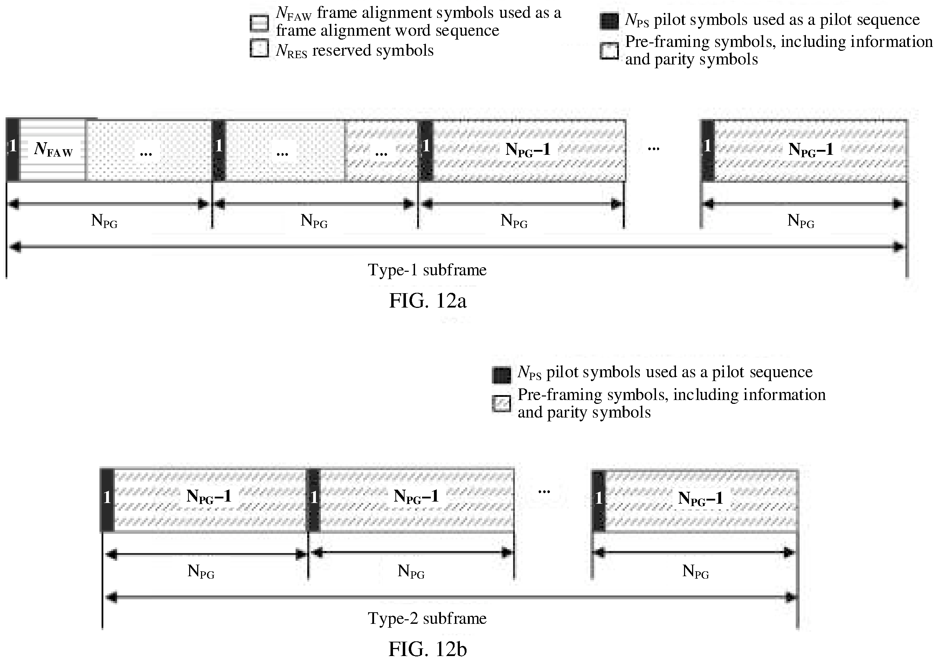

FIG. 12a and FIG. 12b are diagrams of a third structure of subframes according to an embodiment of this application. FIG. 12a shows a structure of a type-1 subframe, and the type-1 subframe includes pilot symbols, frame alignment symbols, reserved symbols, and payload symbols. Generally, the type-1 subframe is a subframe arranged at an initial position in the super-frame, and certainly, may alternatively be at another position in the super-frame. For example, the type-1 subframe may also be a subframe arranged at a last position in the super-frame. A subframe other than the type-1 subframe in the super-frame is a type-2 subframe. As shown in FIG. 12b, the type-2 subframe is different from the type-1 subframe, and the type-2 subframe includes pilot symbols and payload symbols, but does not include a frame alignment symbol or a reserved symbol.

For the type-1 subframe and the type-2 subframe, each subframe includes the pilot symbols, and the pilot symbol is used for carrier phase recovery. In a polarization direction, a quantity of pilot symbols in the subframe is denoted as N_{PS}, where N_{PS} is an even number greater than 0. For the type-1 subframe, a quantity of frame alignment symbols in type-1 subframe is denoted as N_{FAW}, where N_{FAW} is an even number. Generally, a start position in the type-1 subframe is a pilot symbol, and the N_{FAW} frame alignment symbols are arranged adjacent to the pilot symbol.

It should be noted that the type-1 subframes shown in FIG. 10a and FIG. 10b to FIG. 12a and FIG. 12b are used as an example. In embodiments of this application, at least one reserved symbol in the type-1 subframe in at least one polarization direction indicates that the data transmission rate changes. For ease of description, herein, the reserved symbol indicating that the data transmission rate changes may be referred to as a target reserved symbol or a rate switching identifier symbol, and a position in which the reserved symbol or the rate switching identifier symbol is carried is still a reserved position of the reserved symbol. A name of the reserved symbol indicating the rate switching is not limited in this application. The following uses the rate switching identifier symbol as an example for description. In addition, a type-1 subframe that includes the reserved symbol in the super-frame may also be referred to as a target subframe, to distinguish from another subframe that does not include the reserved symbol in the super-frame. During actual application, if channel quality changes or a client-side requirement changes, the transmitter may replace, in a type-1 subframe in one or more super-frames, an original reserved symbol inserted in a framing process with a rate switching identifier symbol indicating rate switching.

It should be understood that, during actual application, a specific quantity of reserved symbols indicating the rate switching depends on a quantity of actually available reserved symbols. This is not limited in this application. For example, in an optical transmission scenario at a 400G rate, a quantity of reserved symbols in a type-1 subframe is 76. For another example, in an optical transmission scenario at an 800G rate, a quantity of reserved symbols in a type-1 subframe is 74. During actual application, all reserved symbols except a reserved symbol that has been defined for a purpose may indicate the rate switching. In embodiments of this application, the position of the reserved symbol indicating the rate switching may be defined based on an actual situation. In other words, this part of reserved symbols is reserved to indicate the rate switching, and is no longer used for another purpose. In this way, in a scenario in which the rate switching needs to be performed, the reserved position of the reserved symbol in the super-frame is replaced with the rate switching identifier symbol or the rate switching identifier symbol indicating the rate switching. In a possible scenario, a plurality of reserved symbols in the type-1 subframe in a polarization direction jointly indicate the rate switching. In another possible scenario, a plurality of reserved symbols in the type-1 subframe in two polarization directions jointly indicate the rate switching. In still another possible scenario, a plurality of reserved symbols in a plurality of super-frames jointly indicate the rate switching.

In some possible scenarios, in addition to indicating that the data transmission rate changes, the reserved symbol reserved in the type-1 subframe may further indicate a changed data transmission rate. In other words, the receiver may learn, by identifying the reserved symbol, that the transmitter is to transmit data at a new rate, and may further learn of a specific rate at which the transmitter transmits the data. In an example, quantities of super-frames carrying rate switching identifier symbols may indicate different data transmission rates. V super-frames (V is an integer greater than 1) are used as an example. The receiver detects the V super-frames to determine a quantity of super-frames carrying the rate switching identifier symbol among the V super-frames, and each detection result correspondingly indicates a specific transmission rate. The following describes a possible application scenario.

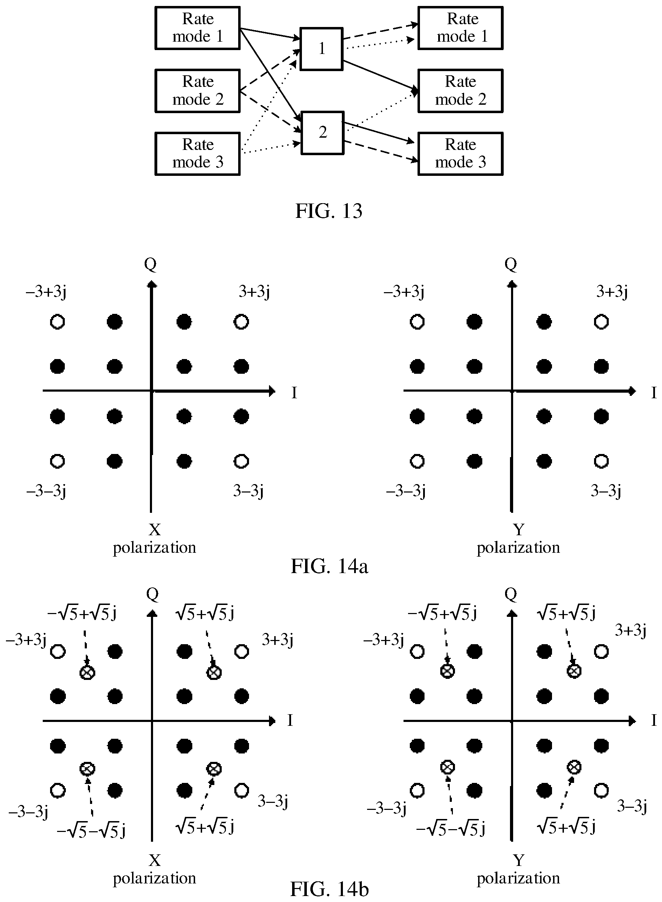

FIG. 13 is a diagram of a scenario of switching between different rate modes according to an embodiment of this application. As shown in FIG. 13, switching between three different rates exists in a transmission system. In this case, the receiver needs to use a result of continuously detecting two super-frames. If the receiver successfully detects that only one of the super-frames carries a rate switching identifier symbol, an original rate mode 1 needs to be switched to a rate mode 2, the original rate mode 2 needs to be switched to the rate mode 1, and an original rate mode 3 needs to be switched to the rate mode 1. If the receiver successfully detects that both the two super-frames carry rate switching identifier symbols, an original rate mode 1 needs to be switched to a rate mode 3, an original rate mode 2 needs to be switched to the rate mode 3, and the original rate mode 3 needs to be switched to the rate mode 2.

It should be noted that each rate switching identifier symbol may be one of four complex numbers: -A-Aj, -A+Aj, A-Aj, and A+Aj, so that a symbol of the rate switching identifier symbol in the constellation diagram of the used modulation format can be flexibly selected based on an actual requirement. For example, sensitivity may be improved. For another example, noise may be reduced. A is a real number. In embodiments of this application, a value of A is determined by a modulation format used when a symbol is generated.

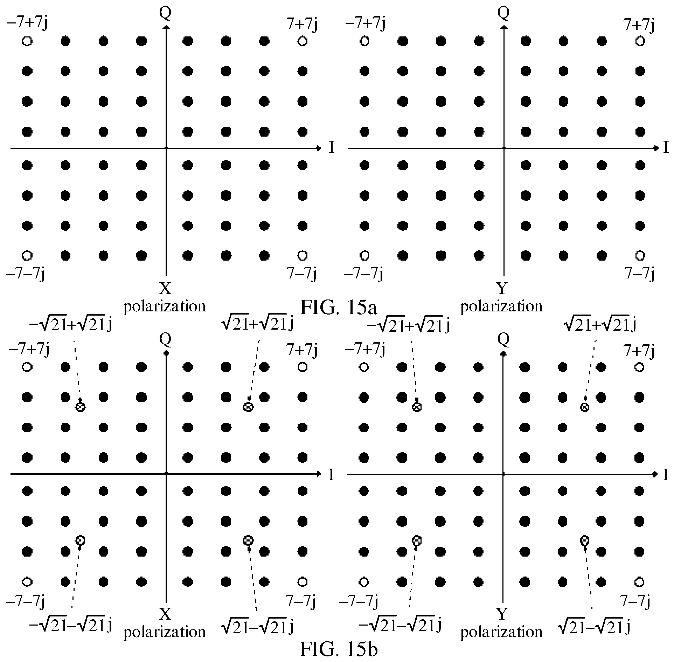

FIG. 14a and FIG. 14b are diagrams of constellation diagrams in two polarization directions according to an embodiment of this application. FIG. 15a and FIG. 15b are other diagrams of constellation diagrams in two polarization directions according to an embodiment of this application. In some actual application scenarios, -A-Aj, -A+Aj, A-Aj, and A+Aj are symbols in the constellation diagram of the used modulation format. For example, when QPSK is used, and there are four symbols, A=1 or -1, and each reserved symbol may be represented by one of -1-1j, -1+1j, 1-1j, and 1+1j. In the type-1 subframe, all reserved symbols represented by the four complex numbers exist. For another example, when 16QAM is used, meaning there are 16 symbols, A=1, -1, 3, or -3. Generally, all reserved symbols are four outermost symbols in the constellation diagram, as shown by hollow symbols in FIG. 14a. In this case, when A=3 or -3, each reserved symbol may be represented by one of -3-3j, -3+3j, 3-3j, and 3+3j. Similarly, when 64QAM is used, meaning there are 64 symbols, A=1, -1, 3, -3, 5, -5, 7, or -7. Generally, in complex numbers representing reserved symbols, A=5, -5, 7, or -7. Assuming that A=7 or -7, as shown by hollow symbols in FIG. 15a, each reserved symbol may be represented by one of -7-7j, -7+7j, 7-7j, and 7+7j. In addition, a higher-order modulation format may alternatively be used. Details are not described in this application. In an actual transmission process, this can reduce a probability of a symbol error and facilitate channel estimation.

It should be noted that, symbols in the constellation diagram may alternatively be compressed. Correspondingly, the value of A is also correspondingly compressed. 16QAM is used as an example. Power normalization is performed on 16 symbols in a 16QAM constellation diagram. In this case, values of the symbols are changed to $\left\{\pm \frac{1}{\sqrt{10}}\pm \frac{1}{\sqrt{10}}j, \pm \frac{1}{\sqrt{10}}\pm \frac{3}{\sqrt{10}}j, \pm \frac{3}{\sqrt{10}}\pm \frac{1}{\sqrt{10}}j, \pm \frac{3}{\sqrt{10}}\pm \frac{3}{\sqrt{10}}j\right\}$, and a value of A is $\frac{1}{\sqrt{10}} , - \frac{1}{\sqrt{10}} , \frac{3}{\sqrt{10}}$, or $- \frac{3}{\sqrt{10}}$. 64QAM is used as an example. Power normalization is performed on 64 symbols in a 64QAM constellation diagram. In this case, values of the symbols are changed to $\left\{\pm \frac{1}{\sqrt{42}}\pm \frac{1}{\sqrt{42}}j, \pm \frac{1}{\sqrt{42}}\pm \frac{3}{\sqrt{42}}j, \pm \frac{1}{\sqrt{42}}\pm \frac{5}{\sqrt{42}}j, \pm \frac{1}{\sqrt{42}}\pm \frac{7}{\sqrt{42}}j, \pm \frac{3}{\sqrt{42}}\pm \frac{1}{\sqrt{42}}j,\right.$ $\pm \frac{5}{\sqrt{42}} \pm \frac{1}{\sqrt{42}} j , \pm \frac{7}{\sqrt{42}} \pm \frac{1}{\sqrt{42}} j , \pm \frac{3}{\sqrt{42}} \pm \frac{3}{\sqrt{42}} j , \pm \frac{3}{\sqrt{42}} \pm \frac{5}{\sqrt{42}} j , \pm \frac{3}{\sqrt{42}} \pm \frac{7}{\sqrt{42}} j , \pm \frac{5}{\sqrt{42}} \pm \frac{3}{\sqrt{42}} j , \pm \frac{7}{\sqrt{42}} \pm \frac{3}{\sqrt{42}} j , \pm \frac{5}{\sqrt{42}} \pm \frac{5}{\sqrt{42}} j , \pm \frac{5}{\sqrt{42}} \pm$ $\left.\frac{7}{\sqrt{42}}j, \pm \frac{7}{\sqrt{42}}\pm \frac{5}{\sqrt{42}}j, \pm \frac{7}{\sqrt{42}}\pm \frac{7}{\sqrt{42}}j\right\}$, and a value of A is $\frac{1}{\sqrt{42}} , - \frac{1}{\sqrt{42}} , \frac{3}{\sqrt{42}} , - \frac{3}{\sqrt{42}} , \frac{5}{\sqrt{42}} , - \frac{5}{\sqrt{42}} , - \frac{7}{\sqrt{42}}$, or $\frac{7}{\sqrt{42}}$. In addition, normalization in another manner may be used. This is not limited in this application.

It should be understood that when the reserved symbols -A-Aj, -A+Aj, A-Aj, and A+Aj use the four outermost symbols in the constellation diagram, sensitivity (sensitivity) of the reserved symbols is relatively high, but a peak to average power (peak to average power) ratio is relatively high. When the reserved symbols whose values are -A-Aj, -A+Aj, A-Aj, and A+Aj, use four innermost symbols in the constellation diagram, noise (noise) of the reserved symbols is relatively small, but sensitivity (sensitivity) of the reserved symbols is relatively low.

It should be noted that, in some actual application scenarios, the reserved symbols -A-Aj, -A+Aj, A-Aj, and A+Aj may alternatively not be the symbols in the constellation diagram of the used modulation format, and may be four symbols in an intermediate area between the four outermost symbols and the four innermost symbols in the constellation diagram. In this case, the reserved symbols have fair noise and sensitivity, but have a low peak to average power ratio. 16QAM is used as an example. Values of 16 symbols in a 16QAM constellation diagram are {±1 ± 1j, ±1 ± 3j, ±3 ± 1j, ±3 ± 3j}, and a value of the real number A satisfies 1 ≤ A ≤ 3. More specifically, as shown in FIG. 14b, four outermost symbols in the constellation diagram are respectively 3 + 3j, 3 - 3j, -3 + 3j, and -3 - 3j, and four innermost symbols in the constellation diagram are respectively 1 + 1j, 1 - 1j, -1 + 1j, and -1 - 1j. The reserved symbols whose values are -A-Aj, -A+Aj, A-Aj, and A+Aj may be four symbols in an intermediate area between the four outermost symbols and the four innermost symbols in the 16QAM constellation diagram. A specific value of the real number A may be selected based on an actual application scenario, so that a peak to average power ratio, noise, and sensitivity of the reserved symbols are well balanced. For example, the real number $A = \sqrt{5}$, and the values of the reserved symbols are $\left\{-\sqrt{5}-\sqrt{5}j, -\sqrt{5}+\sqrt{5}j, \sqrt{5}-\sqrt{5}j, \sqrt{5}+\sqrt{5}j\right\}$. In addition, when power normalization is performed on the 16 symbols in the 16QAM constellation diagram, values of the symbols are $\left\{\pm \frac{1}{\sqrt{10}}\pm \frac{1}{\sqrt{10}}j, \pm \frac{1}{\sqrt{10}}\pm \frac{3}{\sqrt{10}}j, \pm \frac{3}{\sqrt{10}}\pm \frac{1}{\sqrt{10}}j, \pm \frac{3}{\sqrt{10}}\pm \frac{3}{\sqrt{10}}j\right\}$, and a value of the real number A satisfies $\frac{1}{\sqrt{10}} \leq A \leq \frac{3}{\sqrt{10}}$. For example, the real number $A = \frac{\sqrt{2}}{2}$, and the values of the reserved symbols are $\left\{-\frac{\sqrt{2}}{2}-\frac{\sqrt{2}}{2}j,-\frac{\sqrt{2}}{2}+\frac{\sqrt{2}}{2}j,\frac{\sqrt{2}}{2}-\frac{\sqrt{2}}{2}j,\frac{\sqrt{2}}{2}+\frac{\sqrt{2}}{2}j\right\}$ . 64QAM is used as an example. Values of 64 symbols in a 64QAM constellation diagram are {±1 ± 1j, ±1 ± 3j, ±1 ± 5j, ±1 ± 7j, ±3 ± 1j, ±5 ± 1j, ±7 ± 1j, ±3 ± 3j, ±3 ± 5j, ±3 ± 7j, ±5 ± 3j, ±7 ± 3j, ±5 ± 5j, ±5 ± 7j, ±7 ± 5j, ±7 ± 7j}, and a value of the real number A satisfies 1 ≤ A ≤ 7. More specifically, as shown in FIG. 15b, four outermost symbols in the constellation diagram are respectively 7 + 7j, 7 - 7j, -7 + 7j, and -7 - 7j, and four innermost symbols in the constellation diagram are respectively 1 + 1j, 1 - 1j, -1 + 1j, and -1 - 1j. The reserved symbols whose values are -A-Aj, -A+Aj, A-Aj, and A+Aj may be four symbols in an intermediate area between the four outermost symbols and the four innermost symbols in the 64QAM constellation diagram. A specific value of the real number A may be selected based on an actual application scenario, so that a peak to average power ratio, noise, and sensitivity of the reserved symbols are well balanced. For example, the real number $A = \sqrt{21}$*,* and the values of the reserved symbols are $\left\{-\sqrt{21}-\sqrt{21}j, -\sqrt{21}+\sqrt{21}j, \sqrt{21}-\sqrt{21}j, \sqrt{21}+\sqrt{21}j\right\}$*.* In addition, when power normalization is performed on the 64 symbols in the 64QAM constellation diagram, values of the symbols are $\left\{\pm \frac{1}{\sqrt{42}}\pm \frac{1}{\sqrt{42}}j, \pm \frac{1}{\sqrt{42}}\pm \frac{3}{\sqrt{42}}j, \pm \frac{1}{\sqrt{42}}\pm \frac{5}{\sqrt{42}}j, \pm \frac{1}{\sqrt{42}}\pm \frac{7}{\sqrt{42}}j, \pm \frac{3}{\sqrt{42}}\pm \frac{1}{\sqrt{42}}j, \pm \frac{5}{\sqrt{42}}\pm \frac{1}{\sqrt{42}}j, \pm \frac{7}{\sqrt{42}}\pm \frac{1}{\sqrt{42}}j, \pm \frac{3}{\sqrt{42}}\pm \frac{3}{\sqrt{42}}j,\right.$ $\left.\pm \frac{3}{\sqrt{42}}\pm \frac{5}{\sqrt{42}}j, \pm \frac{3}{\sqrt{42}}\pm \frac{7}{\sqrt{42}}j, \pm \frac{5}{\sqrt{42}}\pm \frac{3}{\sqrt{42}}j, \pm \frac{7}{\sqrt{42}}\pm \frac{3}{\sqrt{42}}j, \pm \frac{5}{\sqrt{42}}\pm \frac{5}{\sqrt{42}}j, \pm \frac{5}{\sqrt{42}}\pm \frac{7}{\sqrt{42}}j, \pm \frac{7}{\sqrt{42}}\pm \frac{5}{\sqrt{42}}j, \pm \frac{7}{\sqrt{42}}\pm \frac{7}{\sqrt{42}}j\right\}$, and a value of the real number A satisfies $\frac{1}{\sqrt{42}} \leq A \leq \frac{7}{\sqrt{42}}$. For example, the real number $A = \frac{\sqrt{2}}{2}$, and the values of the reserved symbols are $\left\{-\frac{\sqrt{2}}{2}-\frac{\sqrt{2}}{2}j,-\frac{\sqrt{2}}{2}+\frac{\sqrt{2}}{2}j,\frac{\sqrt{2}}{2}-\frac{\sqrt{2}}{2}j,\frac{\sqrt{2}}{2}+\frac{\sqrt{2}}{2}j\right\}$.

In a possible scenario, a plurality of rate switching identifier symbols in the type-1 subframe jointly indicate the rate switching. The plurality of rate switching identifier symbols may use a pseudo-random sequence with good correlation, so that the receiver can more easily identify the rate switching identifier symbols in the super-frame. The plurality of rate switching identifier symbols may be consecutive, or may be inconsecutive. In another possible scenario, in the type-1 subframe, the rate switching identifier symbol after the replacement and the original reserved symbol before replacement are opposites of each other. For example, if the original reserved symbol before the replacement is -A-Aj, the rate switching identifier symbol after the replacement is A+Aj. This design helps the receiver accurately identify, from the reserved symbol sequence, the rate switching identifier symbol indicating the rate switching, thereby reducing a false detection rate.

It should be noted that, in the type-1 subframe, a sum of real parts including all rate switching identifier symbols in a polarization direction is 0, and a sum of imaginary parts including all the rate switching identifier symbols in the polarization direction is 0. Therefore, direct current balance (DC Balance) can be achieved. This facilitates signal quality recovery of the receiver. It should be further noted that, in a polarization direction, respective quantities of all the rate switching identifier symbols in the type-1 subframe having values of -A-Aj, -A+Aj, A-Aj, and A+Aj differ from each other by no more than 2. This effectively ensures that quantities of reserved symbols of all types are approximately balanced in a polarization direction.

Implementation 2: The one or more padding bits are inserted to indicate the rate switching.

The transmitter first performs first FEC encoding on a to-be-encoded data sequence to obtain a first bit set; then, adds a plurality of padding bits to the first bit set to obtain a second bit set; and further, performs second FEC encoding on the second bit set to obtain a third bit set. The first FEC encoding may be understood as the outer encoding shown in FIG. 3 to FIG. 6, and the second FEC encoding may be understood as the inner encoding shown in FIG. 3 to FIG. 6.

It should be noted that the bit set and the bit subset in the specification and the claims of this application are merely concepts introduced for ease of description. During actual application, the data stream is a whole and is not divided, and each bit set and each bit subset may be considered as one or more bits in a data stream. It should be understood that the bit set and the bit subset may alternatively be presented in a form of a matrix, an array, or the like. This is not specifically limited herein.

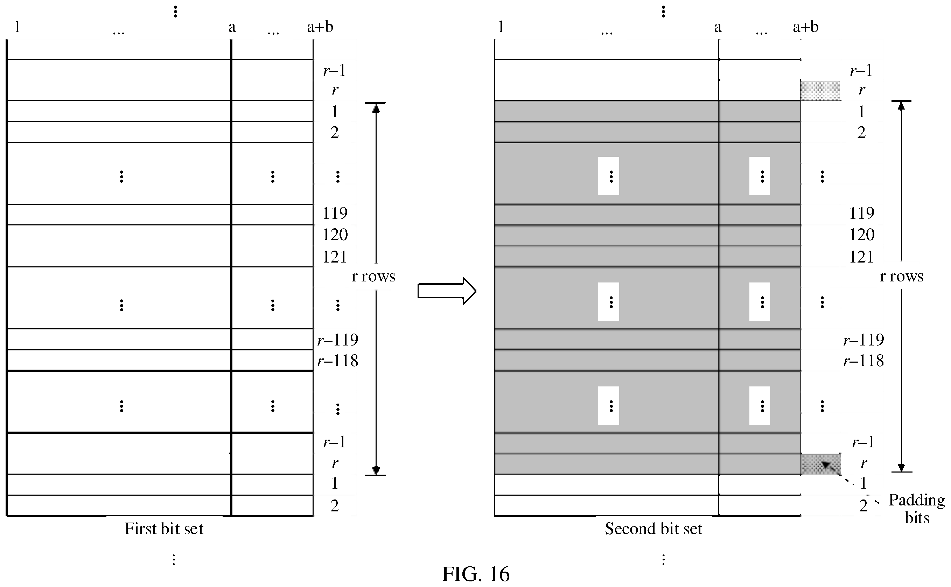

FIG. 16 is a diagram of comparison between a first bit set and a second bit set according to an embodiment of this application. As shown in FIG. 16, the first bit set may be represented in a form of a row-column matrix. In other words, the first bit set includes a plurality of rows and a plurality of columns of bits. The first bit set includes information bits that participate in the outer encoding and parity bits obtained through the outer encoding. For example, a 1^{st} bit to an a^{th} bit in each row of the first bit set are used to carry information bits in the outer encoding, an (a+1)^{th} bit to an (a+b)^{th} bit in each row of the first bit set are used to carry another type of bits such as parity bits other than the information bits, and both a and b are integers greater than 1. A plurality of padding bits are added to every r rows of the first bit set to obtain the second bit set, where a value of r and a specific quantity of padding bits depend on an actual application scenario, and are not limited herein. The following describes several possible application scenarios.

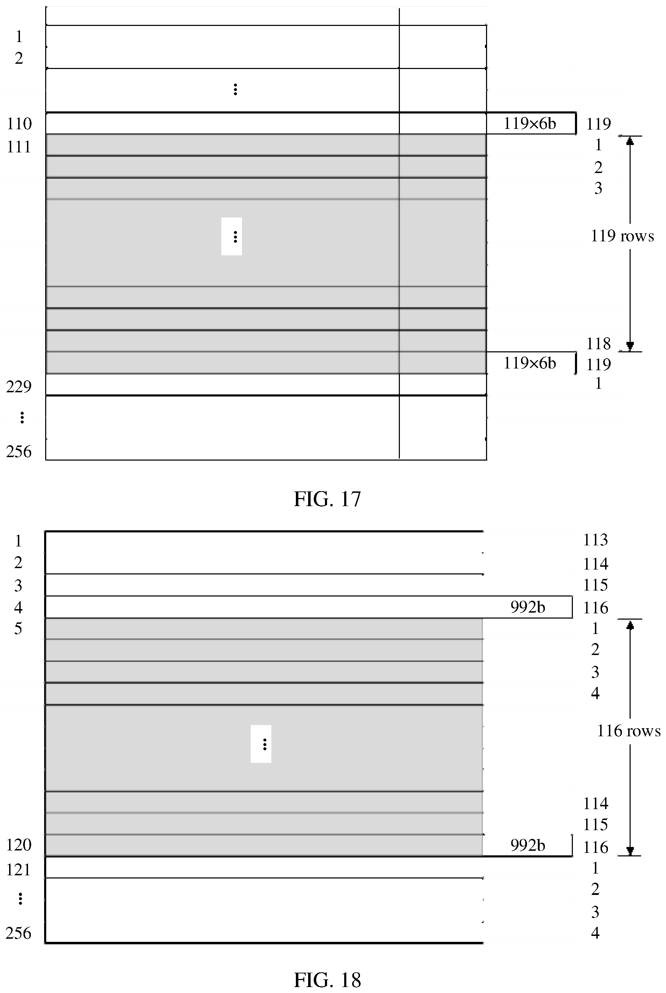

FIG. 17 is a diagram of a structure of a second bit set. As shown in FIG. 17, in a 400G ZR scenario, the second bit set includes 10970 columns of bits, where first 10280 columns are used to carry information bits in the outer encoding, and last 690 columns are used to carry another type of bits such as parity bits other than the information bits. 6×119=714 padding bits are added to every 119 rows of the second bit set.

FIG. 18 is a diagram of another structure of a second bit set. As shown in FIG. 18, in a 400G ZR+ scenario, 992 padding bits are added to 1192480 bits in every 116 rows of the second bit set.

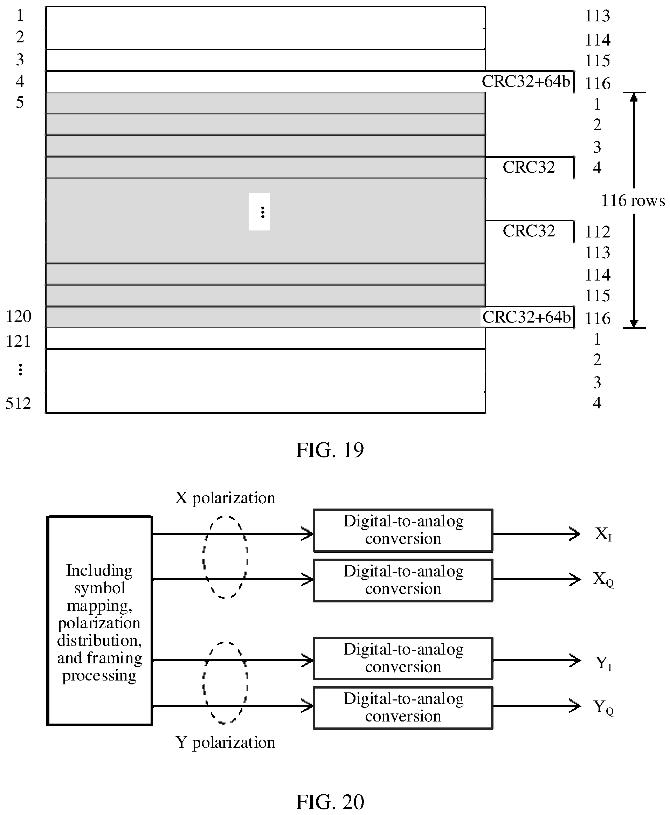

FIG. 19 is a diagram of another structure of a second bit set. As shown in FIG. 19, in an 800G ZR scenario, bits on which cyclic redundancy check (cyclic redundancy check, CRC) is performed are inserted into every four rows of the second bit set. Typically, CRC-32 check is performed. 64 padding bits are added to 1192480 bits in every 116 rows of the second bit set.

It should be understood that the padding bits are mainly added to adapt to the inner encoding manner, and has no actual function. Therefore, in embodiments of this application, the at least one padding bit indicates that the data transmission rate changes. For ease of description, the padding bit indicating that the data transmission rate changes may be referred to as a target padding bit or the rate switching identifier bit herein, and a position at which the padding bit is carried is still a position of a reserved padding bit. A name of the padding bit indicating the rate switching is not limited in this application. The rate switching identifier bit is used as an example below for description. A specific quantity of rate switching identifier bits is not limited herein. During actual application, if channel quality changes or a client-side requirement changes, at the transmitter, a specific value may be designed for the padding bit indicating the rate switching, so that the padding bit serves as the rate switching identifier bit. An example in which a plurality of rate switching identifier bits jointly indicate the rate switching is used. A value of each rate switching identifier bit is 0 or 1, and a sequence formed by the plurality of rate switching identifier bits may be all 0s, all 1s, or any designed value.

In some possible scenarios, in addition to indicating that the data transmission rate changes, the rate switching identifier bit may further indicate a changed data transmission rate. In other words, the receiver may learn, by identifying the rate switching identifier bit, that the transmitter is to transmit data at a new rate, and may further learn of a specific rate at which the transmitter transmits the data.

In an example, different data transmission rates may be indicated based on quantities of padding bits indicating the rate switching, that is, a quantity of rate switching identifier bits indicates a specific data transmission rate. V preset positions of padding bits (V is an integer greater than 1) are used as an example. The receiver detects the V preset positions of padding bits to determine a quantity of reserved positions at which rate switching identifier bits are carried, and each detection result correspondingly indicates a specific transmission rate. For example, refer to the scenario shown in FIG. 13. The switching between the three different rates exists in the transmission system. In this case, the receiver needs to use a result of continuously detecting two preset positions of padding bits. If the receiver successfully detects that only one of the padding bits serves as a rate switching identifier bit, the original rate mode 1 needs to be switched to the rate mode 2, the original rate mode 2 needs to be switched to the rate mode 1, and the original rate mode 3 needs to be switched to the rate mode 1. If the receiver successfully detects that both the two padding bits serve as rate switching identifier bits, the original rate mode 1 needs to be switched to the rate mode 3, the original rate mode 2 needs to be switched to the rate mode 3, and the original rate mode 3 needs to be switched to the rate mode 2.

In another example, because a bit error rate of hard decision of FEC decoding is low, a specific data transmission rate may be further indicated based on a value of the rate switching identifier bit. In a scenario in which the plurality of rate switching identifier bits are included, the receiver determines values of the plurality of rate switching identifier bits through the hard decision of the FEC decoding, where the values of the plurality of rate switching identifier bits are not unique, and each value result correspondingly indicates a specific transmission rate. Three rate switching identifier bits are used as an example. Values of the three rate switching identifier bits may be 010, 110, 101, or the like, and each value result corresponds to one transmission rate.

102: The transmitter sends the super-frame to the receiver.

The super-frame sent by the transmitter is transmitted to the receiver through a channel. It should be noted that, after sending the super-frame that carries the rate switching identifier, the transmitter processes to-be-sent data in a new rate mode, to implement data transmission rate switching.

FIG. 20 is a diagram of an analog symbol data stream according to an embodiment of this application. As shown in FIG. 20, in some possible scenarios, after digital-to-analog conversion (Digital-to-Analog Conversion, DAC) is performed on a super-frame symbol data stream, the super-frame symbol data stream may be considered as four analog symbol data streams that are respectively marked as X_{I}, X_{Q}, Y_{I}, and Y_{Q}. The X_{I} analog symbol data stream and the X_{Q} analog symbol data stream respectively correspond to a real part sequence data stream and an imaginary part sequence data stream in the X polarization direction. The Y_{I} analog symbol data stream and the Y_{Q} analog symbol data stream respectively correspond to a real part sequence data stream and an imaginary part sequence data stream in the Y polarization direction. It should be understood that the X polarization direction and the Y polarization direction are two polarization directions that are orthogonal to each other. In each polarization direction, there are two phase channels that are orthogonal to each other: I (In-phase) and Q (Quadrature). I and Q respectively correspond to the real part sequence data stream and the imaginary part sequence data stream.

103: The receiver identifies the rate switching identifier in the super-frame.

It should be understood that data received by the receiver is data transmitted through the channel, and may be understood as a distorted signal affected by noise or other impairments in the channel. The data received by the receiver includes the super-frame sent by the transmitter, but the data received by the receiver is not aligned with the data sent by the transmitter. Therefore, the receiver needs to perform operations such as frame alignment, polarization demultiplexing, and phase recovery on the received data to obtain the super-frame sent by the transmitter. Further, the receiver then performs inverse operations of the first data processing and the second data processing in FIG. 3 to FIG. 6 to obtain the original data sent by the transmitter. It is considered that two manners of carrying the rate switching identifier in the data are described in step 101. Corresponding manners of identifying the rate switching identifier are described herein for the two manners.

Implementation 1: Identifying the reserved symbol that is in the super-frame and that indicates the rate switching.

In an example, the receiver and the transmitter may agree on in advance a specific design of the reserved symbol indicating the rate switching, that is, the receiver may prestore the rate switching identifier symbol. Further, the receiver performs correlation processing on the obtained super-frame based on the pre-stored rate switching identifier symbol, to determine whether the super-frame carries the rate switching identifier symbol. Specifically, if a correlation peak obtained through the correlation processing is less than or equal to a first preset value, it indicates that the rate switching identifier symbol is not detected. If a correlation peak obtained through the correlation processing is greater than a first preset value, it indicates that the rate switching identifier symbol is detected. The first preset value may be set to a correlation value when there are only M positions in which symbol errors occur, 0 ≤ M ≤ *N*₁/2, and *N*₁ is a quantity of rate switching identifier symbols.

A miss detection rate may be represented by the following formula (1):
$1 - {\sum }_{i = 0}^{M} {C}_{{N}_{1}}^{i} {P}_{C}^{i} {\left(1-{P}_{C}\right)}^{\left({N}_{1}-i\right)} ,$ where *P_{C}* is a symbol error rate.

A false detection rate may be represented by the following formula (2):
$1 - {\sum }_{i = 0}^{M} {C}_{{N}_{1}}^{i} {P}_{E}^{i} {\left(1-{P}_{E}\right)}^{\left({N}_{1}-i\right)} ,$ where *P_{E}* is a probability of misjudgment as the rate switching identifier symbol.

For example, *N*₁ = 24. The symbols may be 24 rate switching identifier symbols in a polarization direction, or may include 12 rate switching identifier symbols in each of the X polarization direction and the Y polarization direction. M=12, and BER=1.25e-2. Corresponding *P_{C}* is 2.5e - 2, and the miss detection rate may be 3.33e-15 according to the formula (1). A maximum value of corresponding *P_{E}* is 1.25e-2, and the false detection rate is less than 1e-16 according to the formula (2).

In another example, the receiver and the transmitter may agree on in advance a specific design of the reserved symbol indicating the rate switching and a position used to carry the reserved symbol, that is, the receiver may prestore the rate switching identifier symbol and the position used to carry the rate switching identifier symbol. Further, the receiver detects the position in the super-frame for carrying the rate switching identifier symbol to determine whether the super-frame carries the rate switching identifier symbol. Specifically, if a quantity of erroneously detected symbols is greater than or equal to a second preset value, it indicates that the rate switching identifier symbol is not detected. If a quantity of erroneously detected symbols is less than a second preset value, it indicates that the rate switching identifier symbol is detected. The second preset value is denoted as M, 0 ≤ M ≤ *N*₁/2, and *N*₁ is a quantity of rate switching identifier symbols.

For example, *N*₁ = 24. The symbols may be 24 rate switching identifier symbols in a polarization direction, or may include 12 rate switching identifier symbols in each of the X polarization direction and the Y polarization direction. M=12, and BER=1.25e-2. Corresponding *P_{C}* is 2.5e - 2, and the miss detection rate may be 3.33e-15 according to the formula (1). A maximum value of corresponding *P_{E}* is 1.25e-2, and the false detection rate is less than 1e-16 according to the formula (2).

Implementation 2: Identifying the padding bit that is in a decoded bit set and that indicates the rate switching.

After performing the operations such as the frame alignment, the polarization demultiplexing, and the phase recovery on the received data to obtain the super-frame, the receiver first performs an inverse operation of the second data processing in FIG. 3 to FIG. 6, and then performs inner decoding to obtain the bit set, where the bit set includes the padding bit added by the transmitter. The receiver and the transmitter may agree on in advance a specific design of the padding bit indicating the rate switching and a position used to carry the padding bit, that is, the receiver may prestore the rate switching identifier bit and the position used to carry the rate switching identifier bit. Further, the receiver detects the position in the bit set, which is obtained through the inner decoding, for carrying the rate switching identifier bit to determine whether the bit set carries the rate switching identifier bit. Specifically, if a quantity of detected error bits is greater than or equal to a third preset value, it indicates that the rate switching identifier bit is not detected. If a quantity of detected error bits is less than a third preset value, it indicates that the rate switching identifier bit is detected. The quantity of detected error bits is denoted as W, 0 ≤ *W* ≤ *N*₂/2, and *N*₂ is a quantity of rate switching identifier bits.

A miss detection rate and a false detection rate may be represented by the following formula (3):
$1 - {\sum }_{i = 0}^{W} {C}_{{N}_{2}}^{i} {P}_{B}^{i} {\left(1-{P}_{B}\right)}^{\left({N}_{2}-i\right)} ,$ where *P_{B}* is a bit error rate.

For example, *N*₂ = 15, W=7, and BER=4.5e-3. Corresponding *P_{B}* is 4.5e - 3, and the miss detection rate and the false detection rate may be 3.33e-16 according to the formula (3).

104: The receiver performs data processing in the new rate mode.

In a possible scenario, for Implementation 1 in step 103, if the receiver detects the rate switching identifier symbol in one super-frame, the receiver may start to perform the data processing in the new mode rate from a super-frame at any position after the super-frame. This specifically depends on a specific super-frame from which the transmitter starts to perform the data processing in the new rate mode. The following describes a possible scenario.

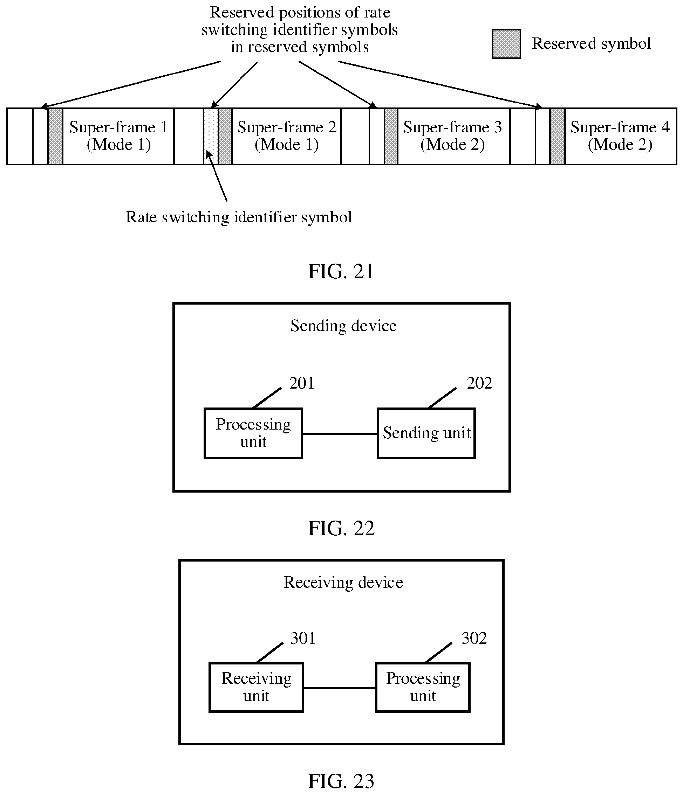

FIG. 21 is a diagram of an application scenario in which a receiver performs rate switching according to an embodiment of this application. As shown in FIG. 21, the receiver performs data processing on a super-frame 1 and a super-frame 2 in a rate mode 1, and the receiver detects a rate switching identifier symbol in the super-frame 2, to prepare to start rate switching. The receiver may perform data processing on a subsequent super-frame in a rate mode 2 starting from a super-frame 3, or the receiver may perform data processing on a subsequent super-frame in a rate mode 2 starting from a super-frame 4.

In another possible scenario, for Implementation 2 in step 103, if the receiver identifies the rate switching identifier bit from the bit set obtained through the inner decoding, the receiver may start to perform the data processing in the new rate mode starting from a position that is in the bit set and that is after the rate switching identifier bit. The scenario shown in FIG. 17 is used as an example. The receiver performs data processing on bits in first 228 rows in the bit set in the rate mode 1. The receiver detects a rate switching identifier bit in last 714 padding bits of a 228^{th} row in the bit set. The receiver may perform data processing in the rate mode 2 starting from a 229^{th} row or any row after the 229^{th} row in the bit set. It should be understood that in this embodiment, because the bit set obtained through the inner decoding is detected to identify the rate switching identifier bit, after sending the rate switching identifier bit, the transmitter usually needs to delay a period of time before sending data at a new transmission rate. This delay duration needs to be greater than duration required for the inner decoding.

FIG. 22 is a diagram of a structure of a sending device according to an embodiment of this application. As shown in FIG. 22, the sending device includes a processing unit 201 and a sending unit 202. The processing unit 201 is configured to perform the operation of step 101, and the sending unit 202 is configured to perform the operation of step 102. It should be understood that the sending device provided in this embodiment of this application may alternatively be implemented in another manner. For example, division into the units in the sending device is merely logical function division and may be other division in actual implementation. For example, a plurality of units or components may be combined or integrated into another system. In addition, functional units in embodiments of this application may be integrated into one processing unit, may be independent physical units, or two or more functional units may be integrated into one processing unit. The integrated unit may be implemented in a form of hardware, or may be implemented in a form of a software functional unit.

FIG. 23 is a diagram of a structure of a receiving device according to an embodiment of this application. As shown in FIG. 23, the receiving device includes a receiving unit 301 and a processing unit 302. The receiving unit 301 is configured to perform the operation of step 102, and the processing unit 302 is configured to perform the operations of step 103 and step 104. It should be understood that the receiving device provided in this embodiment of this application may alternatively be implemented in another manner. For example, division into the units in the receiving device is merely logical function division and may be other division in actual implementation. For example, a plurality of units or components may be combined or integrated into another system. In addition, functional units in embodiments of this application may be integrated into one processing unit, may be independent physical units, or two or more functional units may be integrated into one processing unit. The integrated unit may be implemented in a form of hardware, or may be implemented in a form of a software functional unit.

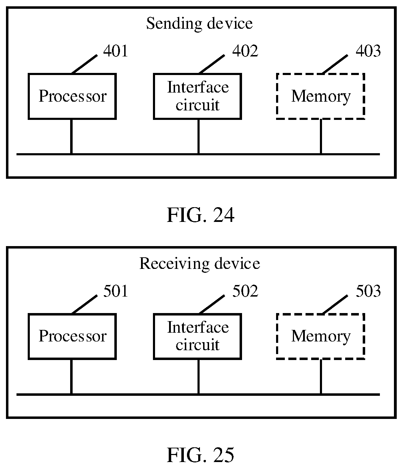

FIG. 24 is a diagram of another structure of a sending device according to an embodiment of this application. As shown in FIG. 24, the sending device includes a processor 401 and an interface circuit 402. The processor 401 is configured to perform the operation of step 101, and the interface circuit 402 is configured to perform the operation of step 102. The interface circuit 402 may be a transceiver or an input/output interface. The interface circuit 402 is configured to: receive a signal from an apparatus other than the sending device and transmit the signal to the processor 401, or send a signal from the processor 401 to an apparatus other than the sending device. Optionally, the sending device may further include a memory 403, where the memory 403 is configured to store program instructions and data.

FIG. 25 is a diagram of another structure of a receiving device according to an embodiment of this application. As shown in FIG. 25, the receiving device includes a processor 501 and an interface circuit 502. The interface circuit 502 is configured to perform the operation of step 102, and the processor 501 is configured to perform the operations of step 103 and step 104. The interface circuit 502 may be a transceiver or an input/output interface. The interface circuit 502 is configured to: receive a signal from an apparatus other than the receiving device and transmit the signal to the processor 501, or send a signal from the processor 501 to an apparatus other than the receiving device. Optionally, the receiving device may further include a memory 503, where the memory 503 is configured to store program instructions and data.

An embodiment of this application further provides a chip. A circuit and one or more interfaces that are configured to implement a function of the processor 401 or the processor 501 are integrated into the chip. In an example, a memory is integrated into the chip. In another example, when no memory is integrated into the chip, the chip may be connected to an external memory through an interface. The chip may complete the steps of the method in any one or more of the foregoing embodiments. Alternatively, the chip implements, based on program code stored in the memory, the actions performed by the the processor 401 or the processor 501 in the foregoing embodiments.

An embodiment of this application further provides a computer-readable storage medium, including a program or instructions. When the program or the instructions are run on a computer, the method performed by the processor 401 or the processor 501 in the foregoing method embodiments is performed.

It should be understood that the processor mentioned in embodiments of this application may be implemented by using hardware or software. When the hardware is used for the implementation, the processor may be a logic circuit, an integrated circuit, or the like. When the software is used for the implementation, the processor may be a general-purpose processor, and is implemented by reading software code stored in the memory.

In an example, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA), another programmable logic device, a transistor logic device, a hardware component, or any combination thereof. The general-purpose processor may be a microprocessor, any conventional processor, or the like.

The memory in embodiments of this application may be a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well known in the art. For example, a storage medium is coupled to a processor, so that the processor can read information from the storage medium and write information into the storage medium. Certainly, the storage medium may alternatively be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

All or some of the foregoing embodiments may be implemented by using software, hardware, firmware, or any combination thereof.

When the hardware is used for the implementation, the data processing method provided in embodiments of this application may not be implemented by reading software code or instructions, for example, may be implemented by using a CPU, a DSP, an ASIC, an FPGA, another programmable logic device, a transistor logic device, a hardware component, or any combination thereof.

When the software is used for the implementation, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, a terminal device, or another programmable apparatus. The computer programs or the instructions may be stored in a computer-readable storage medium, or may be transmitted through the computer-readable storage medium. The computer-readable storage medium may be any usable medium accessible by the computer, or a data storage device, for example, a server, integrating one or more usable media. The usable medium may be a magnetic medium, for example, a floppy disk, a hard disk, or a magnetic tape; may be an optical medium, for example, a DVD; or may be a semiconductor medium, for example, a solid state disk (solid state disk, SSD).

Finally, it should be noted that: The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, comprising:
obtaining at least one super-frame, wherein the super-frame comprises a plurality of subframes, a target subframe in the super-frame in a polarization direction comprises a plurality of pilot symbols, a plurality of frame alignment symbols, and a plurality of reserved symbols, and at least one target reserved symbol in the target subframe in at least one polarization direction indicates that a data transmission rate changes; and
sending the at least one super-frame.

2. The method according to claim 1, wherein the target reserved symbol further indicates a changed data transmission rate.

3. The method according to claim 2, wherein at least one of the at least one super-frame comprises the target reserved symbol, and a quantity of super-frames carrying the target reserved symbol among the at least one super-frame indicates the changed data transmission rate.

4. The method according to any one of claims 1 to 3, wherein obtaining the at least one super-frame comprises:
replacing at least one reserved symbol in the target subframe in at least one polarization direction with the corresponding target reserved symbol.

5. The method according to claim 4, wherein a plurality of target reserved symbols in the target subframe in at least one polarization direction indicate that the data transmission rate changes, and the plurality of target reserved symbols are a pseudo-random sequence.

6. The method according to claim 4, wherein the target reserved symbol and the corresponding reserved symbol before replacement are opposites of each other.

7. The method according to any one of claims 1 to 6, wherein each target reserved symbol is one of four complex numbers: -A-Aj, -A+Aj, A-Aj, and A+Aj, and A is a real number.

8. The method according to claim 7, wherein in a polarization direction, a modulation format of the target reserved symbol is quadrature phase shift keying QPSK, and A=-1 or 1; in a polarization direction, a modulation format of the target reserved symbol is 16-state quadrature amplitude modulation 16QAM, and A=-1, 1, -3, 3, $- \sqrt{5}$, or $\sqrt{5}$; or in a polarization direction, a modulation format of the target reserved symbol is 64-state quadrature amplitude modulation 64QAM, and A=-1, 1, -3, 3, $- \sqrt{21} , \sqrt{21}$*,* -5, 5, -7, or 7.

9. The method according to claim 7 or 8, wherein a sum of real parts of all target reserved symbols in the target subframe in a polarization direction is 0, and a sum of imaginary parts of all the target reserved symbols in the target subframe in the polarization direction is 0.

10. The method according to any one of claims 7 to 9, wherein in a polarization direction, respective quantities of all the target reserved symbols in the target subframe having values of -A-Aj, -A+Aj, A-Aj, and A+Aj differ from each other by no more than 2.

11. The method according to any one of claims 1 to 10, wherein the target subframe is a subframe arranged at an initial position in the super-frame.

12. The method according to any one of claims 1 to 11, wherein the target subframe further comprises a plurality of training symbols and/or a plurality of pre-framing symbols.

13. The method according to any one of claims 1 to 12, wherein the target subframe comprises one pilot symbol at a fixed position in every H consecutive symbols, and H=32, 64, 96, or 128.

14. A data processing method, comprising:
obtaining a super-frame transmitted through a channel, wherein the super-frame comprises a plurality of subframes, a target subframe in the super-frame in a polarization direction comprises a plurality of pilot symbols, a plurality of frame alignment symbols, and a plurality of reserved symbols, and at least one target reserved symbol in the target subframe in at least one polarization direction indicates that a data transmission rate changes; and
identifying the target reserved symbol in the super-frame.

15. The method according to claim 14, wherein identifying the target reserved symbol in the super-frame comprises:
performing correlation processing on the super-frame based on a preset target reserved symbol to identify the target reserved symbol in the super-frame, wherein a correlation peak obtained through the correlation processing is greater than a first preset value.

16. The method according to claim 14, wherein identifying the target reserved symbol in the super-frame comprises:
obtaining a position in the super-frame for carrying the target reserved symbol; and
detecting the position in the super-frame for carrying the target reserved symbol to identify the target reserved symbol in the super-frame, wherein a quantity of erroneously detected symbols is less than a second preset value.

17. The method according to any one of claims 14 to 16, wherein obtaining the super-frame transmitted through the channel comprises:
receiving a data stream transmitted through the channel; and
performing frame alignment, polarization demultiplexing, and phase recovery on the data stream to obtain the super-frame.

18. A sending device, wherein the sending device comprises a processing unit and a sending unit, wherein
the processing unit is configured to obtain at least one super-frame, wherein the super-frame comprises a plurality of subframes, a target subframe in the super-frame in a polarization direction comprises a plurality of pilot symbols, a plurality of frame alignment symbols, and a plurality of reserved symbols, and at least one target reserved symbol in the target subframe in at least one polarization direction indicates that a data transmission rate changes; and
the sending unit is configured to send the at least one super-frame.

19. The sending device according to claim 18, wherein the target reserved symbol further indicates a changed data transmission rate.

20. The sending device according to claim 19, wherein at least one of the at least one super-frame comprises the target reserved symbol, and a quantity of super-frames carrying the target reserved symbol among the at least one super-frame indicates the changed data transmission rate.

21. The sending device according to any one of claims 18 to 20, wherein the processing unit is specifically configured to:
replace at least one reserved symbol in the target subframe in at least one polarization direction with the corresponding target reserved symbol.

22. The sending device according to claim 21, wherein a plurality of target reserved symbols in the target subframe in at least one polarization direction indicate that the data transmission rate changes, and the plurality of target reserved symbols are a pseudo-random sequence.

23. The sending device according to claim 22, wherein the target reserved symbol and the corresponding reserved symbol before replacement are opposites of each other.

24. A sending device, wherein the sending device comprises a processor and an interface circuit, the processor is configured to perform the method according to any one of claims 1 to 13, and the interface circuit is configured to send a super-frame through a channel.

25. A receiving device, comprising a receiving unit and a processing unit, wherein
the receiving unit is configured to obtain a super-frame transmitted through a channel, wherein the super-frame comprises a plurality of subframes, a target subframe in the super-frame in a polarization direction comprises a plurality of pilot symbols, a plurality of frame alignment symbols, and a plurality of reserved symbols, and at least one target reserved symbol in the target subframe in at least one polarization direction indicates that a data transmission rate changes; and
the processing unit is configured to identify the target reserved symbol in the super-frame.

26. The receiving device according to claim 25, wherein the processing unit is specifically configured to:
perform correlation processing on the super-frame based on a preset target reserved symbol, to identify the target reserved symbol in the super-frame, wherein a correlation peak obtained through the correlation processing is greater than a first preset value.

27. The receiving device according to claim 25, wherein the processing unit is specifically configured to:
obtain a position in the super-frame for carrying the target reserved symbol; and
detect the position in the super-frame for carrying the target reserved symbol, to identify the target reserved symbol in the super-frame, wherein a quantity of erroneously detected symbols is less than a second preset value.

28. A receiving device, wherein the receiving device comprises a processor and an interface circuit, the interface circuit is configured to obtain a super-frame transmitted through a channel, and the processor is configured to perform the method according to any one of claims **14** to 17.

29. A data transmission system, wherein the data transmission system comprises the sending device according to any one of claims 18 to 24 and the receiving device according to any one of claims 25 to 28.

30. A chip, wherein the chip comprises a processor, and the processor is configured to perform the method according to any one of claims 1 to 17.
